# FASCICULE DE BREVET EUROPEEN

(11) **EP 3 846 512 B1**
(45) Date de publication et mention de la délivrance du brevet: **09.09.2026**
(21) Numéro de dépôt: 20218025.3
(22) Date de dépôt: 31.12.2020
(51) Int. Cl.: H04W 4/70, H04W 4/46, H04W 4/90, H04W 12/06, H04W 12/069

(54) **SYSTÈME ET PROCÉDÉ DE GESTION DE L'AUTHENTIFICATION POUR LA COMMUNICATION DIRECTE ENTRE DES TERMINAUX DE COMMUNICATION MOBILES D'UN SYSTÈME DE RADIOCOMMUNICATION MOBILE**
SYSTEM UND VERFAHREN ZUR STEUERUNG DER AUTHENTIFIZIERUNG FÜR DIE DIREKTE KOMMUNIKATION ZWISCHEN MOBILEN KOMMUNIKATIONSENDGERÄTEN EINES MOBILFUNKKOMMUNIKATIONSSYSTEMS
SYSTEM AND METHOD FOR MANAGING AUTHENTICATION FOR DIRECT COMMUNICATION BETWEEN MOBILE COMMUNICATION TERMINALS OF A MOBILE RADIO COMMUNICATION SYSTEM

(30) Priorité: 31.12.2019 FR 1915749
(43) Date de publication de la demande: 07.07.2021
(73) Titulaire: BULL SAS, 78340 Les Clayes-sous-Bois (FR)
(72) Inventeur: PISON, Laurent, 78760 Jouars Pontchartrain (FR); DUBOIS, François, 60730 Cauvigny (FR)
(74) Mandataire: IPAZ

(56) Documents cités:
- EP-A1- 3 096 544
- EP-A1- 3 675 542
- "3rd Generation Partnership Project; Technical Specification Group Services and System Aspects; Proximity-based Services (ProSe); Security aspects (Release 15)", 3GPP STANDARD; TECHNICAL SPECIFICATION; 3GPP TS 33.303, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V15.0.0, 22 June 2018 (2018-06-22), pages 1 - 90, XP051473871
- HUAWEI ET AL: "RAN2 considerations for D2D communication", vol. RAN WG2, no. Barcelona, Spain; 20130819 - 20130823, 12 August 2013 (2013-08-12), XP050718591, Retrieved from the Internet <URL:http://www.3gpp.org/ftp/tsg_ran/WG2_RL2/TSGR2_83/Docs/> [retrieved on 20130812]

## Description

La présente invention concerne de manière générale les systèmes de radiocommunications avec des mobiles. En particulier, elle concerne un système supportant la communication directe authentifiée entre des terminaux de communication mobiles.

### [Art antérieur]

Les réseaux de télécommunication avec les mobiles, comme les réseaux cellulaires définie par le consortium 3GPP, tels que les réseaux selon les normes, GSM, UMTS, LTE (« *Long Term Evolution* ») et son évolution LTE-A (« Advanced LTE »), permettent d'établir des communications à haut débit entre des terminaux mobiles. L'architecture de ces réseaux repose généralement sur un ensemble de stations de base, appelées eNodeB (de l'anglais « *evolved Node B* ») dans la norme LTE, qui sont des nœuds de réseau fixes formant la partie radio du réseau, appelée eUTRAN dans la norme LTE, et qui établissent des communications sans fil avec des terminaux mobiles, appelés UEs (de l'anglais « *User Equipements* ») dans la norme LTE, via une interface radio spécifique, appelée interface Uu dans la norme LTE.

L'authentification des terminaux de communication mobiles dans le cadre des réseaux de télécommunication utilise généralement les secrets partagés entre un serveur HSS (mis pour « Home Subscriber Server », en anglais) du cœur du réseau, et une carte USIM (mis pour « Universal Subscriber Identity Module », en anglais) des terminaux de communications mobiles, et utilisant le protocole EMM (de l'anglais « *EPS Mobility Management* ») entre une entité MME (mis pour « Mobility Management Entity », en anglais) et un terminal de communication mobile (UE) via une eNodeb et l'interface radio LTE-Uu entre ladite eNodeB et ledit UE.

Les authentifications des terminaux de communication mobiles qui ont lieu au sein du réseau doivent nécessairement passer par le cœur du réseau, appelé EPC (de l'anglais « *Evolved Packet Core* ») dans la norme LTE. Autrement dit, les terminaux de communication mobiles des réseaux de télécommunication ne peuvent pas s'authentifier directement entre eux, mais uniquement par l'intermédiaire du cœur du réseau.

Dans certains cas, toutefois, il peut être souhaitable de pouvoir établir une liaison de communication entre deux équipements donnés authentifiés en s'affranchissant de toute infrastructure de communication à partir de laquelle de tels équipements ont accès au réseau de télécommunications.

Un cas d'usage typique est par exemple celui des forces de sécurité, notamment sur le théâtre d'opérations extérieures, et de secours (police, pompiers, ambulances, etc.) qui doivent pouvoir collaborer et communiquer entre elles suite par exemple à une interruption des services de communication classiques due à une surcharge du système ou à une catastrophe naturelle, comme un tremblement de terre ou un raz de marée ayant pour conséquence immédiate la mise hors service des installations de communication à terre qui participent au cœur de réseau. Il existe donc le besoin d'une solution permettant de mettre en place un réseau de substitution entre les terminaux mobiles et/ou les cellules mobiles, pour pallier la défaillance du réseau standard et/ou des équipements du cœur de réseau.

En résumé, notamment mais pas uniquement dans le contexte évoqué ci-dessus, il peut être utile pour des applications spécifiques d'établir des liaisons de communication entre plusieurs terminaux de communication mobiles, afin de rendre les échanges de données entre ces structures mobiles autonomes par rapport au cœur du réseau. Néanmoins dans ce contexte se pose la question du protocole d'établissement d'une liaison directe ou indirecte entre terminaux de communication mobiles et notamment du niveau de sécurité lui étant associé. En effet, en général, sur les systèmes NB classiques (par exemple Tetra ou P25), il n'y a pas d'authentification, voire de chiffrement possible au niveau des échanges D2D radio, ni de gestion de l'intégrité. La seule possibilité est de sécuriser les communications au niveau du flux applicatif par exemple par l'intermédiaire de clé de communication de type groupe.

Il a par exemple été proposé un système de radio numérique mobile professionnel bidirectionnel comprenant une pluralité de terminaux de communication mobiles. De tels terminaux de communication mobiles peuvent communiquer selon un mode direct, où chacun des terminaux de communication mobile échangent avec un autre terminal sans passer par une station de base, ou employer l'infrastructure d'un réseau de communication en passant par une station de base. Cela permet des communications directes dans les situations où la couverture radio du réseau a été perdue. Cette fonctionnalité permet par exemple des communications directes en sous-sol ou dans des secteurs avec une mauvaise couverture radio. Un tel système de radio numérique peut acheminer plusieurs types de communication de données. Les données en mode paquet ou la communication de données avec commutation de circuits utilisent des canaux dédiés à ces trafics. La sécurité relative au trafic de ces données est assurée par le chiffrement desdites données lors de leur émission ou encore via un chiffrement de bout en bout.

En outre, généralement, ce système de communication fonctionne sur une fréquence de bandes sous le Giga Hertz (GHz). En effet, les systèmes de radio numérique évoluent selon un spectre de fréquence généralement compris entre 160 MHz et 400 MHz notamment défini dans les normes EN 300 392-1 et EN 300 392-2. Il en résulte que le transfert de données est lent (de l'ordre de 7,2 kbit/s par time-slot), le flux de données utilisable n'est que de 3,5 kbit/s. Ce flux peut être augmenté modérément en utilisant jusqu'à quatre time-slots combinés par exemple en utilisant principalement quatre canaux entrelacés dans une porteuse de 25 Kilo Hertz (KHz) selon un accès multiple à répartition dans le temps « TDMA » (pour « time division multiple access » selon une terminologie anglo-saxonne). Ainsi, un tel système de radio numérique ne peut supporter qu'un nombre de terminaux de communication mobiles très inférieur à ce qu'un réseau classique, notamment les réseaux GSM (pour « Global System for mobile » selon une terminologie anglo-saxonne), UMTS (pour « Universal Mobile Telecommunications System » selon une terminologie anglo-saxonne), LTE (pour « Long term Evolution » selon une terminologie anglo-saxonne) ou LTE advanced permettent dans une zone géographique donnée et les technologies semblables permettent dans un secteur donné.

Une solution pourrait reposer sur l'établissement d'une liaison de type liaison en mode direct de façon à créer une liaison entre un terminal de communication mobile et un ou plusieurs autres terminaux de communication mobiles. Cependant, ce type de liaison ne permet plus d'utiliser l'infrastructure réseau habituellement utilisée pour gérer les aspects de sécurité selon les techniques connues des normes LTE du consortium 3GPP, par exemple.

En effet, lors d'un établissement de connexion dUE-dUE (selon un mode appelé « mode D2D », pour « device to device » selon une terminologie anglo-saxonne, dans la présente description), le eNodeb et l'interface Uu ne sont pas utilisés. Le cadre prévu dans les normes LTE pour la gestion de la sécurité avec utilisation du module USIM et du serveur HSS (échange de secrets partagés) ne peut donc pas être utilisé en l'état pour l'authentification, le chiffrement et le contrôle d'intégrité.

Ainsi, il existe un besoin pour un procédé ou un système permettant de gérer l'authentification d'un ou de plusieurs terminaux de communication mobiles pour l'établissement de communications, selon un mode direct, sécurisées et à haut débit tout en permettant de s'affranchir de l'infrastructure d'un réseau de communication fixe.

### [Problème technique]

L'invention a pour but de remédier aux inconvénients de l'art antérieur. En particulier, l'invention a pour but de proposer une alternative permettant de se passer de l'infrastructure fixe du réseau pour la gestion des aspects d'authentification, notamment l'authentification d'un terminal de communication mobile qui participe à l'établissement d'une liaison en mode direct avec un autre terminal de communication mobile, tout en utilisant les techniques d'authentification standardisées et permettant de supporter les techniques les plus récentes et avancées en matière de sécurité.

### [Brève description de l'invention]

A cet effet, un premier aspect de l'invention concerne un système de communication comprenant un terminal de communication mobile local et un terminal de communication mobile distant, ledit terminal de communication mobile distant comportant un coffre-fort électronique configuré pour mémoriser au moins une clé de sécurité,
ledit terminal de communication mobile local étant configuré pour établir une liaison en mode direct avec ledit terminal de communication mobile distant,
ledit système de communication étant caractérisé en ce que ledit terminal de communication mobile local comporte :
   - une base de données de souscription configurée pour mémoriser au moins une clé de sécurité, chacune des clés de sécurité formant un secret partagé entre un terminal de communication mobile local et un ou plusieurs terminaux de communication mobile distants et pour générer au moins un vecteur d'authentification à partir de l'au moins une clé de sécurité ;
   - un émulateur d'une entité de gestion de la sécurité, configurée pour émuler une interface d'accès à la base de données de souscription dudit terminal de communication mobile local et pour générer une requête d'authentification à partir de l'au moins un vecteur d'authentification ; et,
   - un module mandataire configuré pour relayer la requête d'authentification, entre l'émulateur d'une entité de gestion de la sécurité et le terminal de communication mobile distant, ladite requête d'authentification comportant une partie signalisation d'un protocole conforme à la liaison en mode direct, pour l'authentification dudit terminal de communication mobile distant sur la base de données de souscription dudit terminal de communication mobile local.

L'invention est basée notamment sur l'utilisation d'une base de données de souscription locale (i.e. d'un terminal de communication mobile local), ainsi que l'identifiant unique du terminal de communication mobile distant souhaitant établir une communication selon un mode direct avec le terminal de communication mobile local, afin de gérer la sécurité de chaque terminal de communication mobile et d'éviter que des terminaux de communication mobiles non autorisés ne se connectent et perturbent ou encore interceptent les communications entre des terminaux de communication mobiles. La présente invention permet notamment de gérer le droit d'un terminal de communication mobile donné de se connecter à un terminal de communication mobile distant. Un avantage de l'invention, notamment, est de permettre l'utilisation de terminaux de communication mobiles utilisant les techniques d'authentification connues pour la mise en place d'une communication directe. Le nouveau chemin de transport mis en œuvre par un système selon l'invention permet avantageusement l'utilisation d'un module d'identification tel qu'un module USIM et des protocoles d'accès classiques pour authentifier un terminal de communication mobile distant. Ainsi, le protocole logique utilisé reste au plus proche des protocoles existants afin d'assurer une simplicité d'utilisation et un support au plus proche des protocoles standards et de leurs évolutions. Il y a donc un support possible des techniques les plus récentes et avancées en matière de sécurité.

Un autre avantage du fait que les aspects d'authentification soient supportés par la liaison directe entre les terminaux de communication mobiles, est de pouvoir utiliser (en sus de l'unicast) un protocole point-multipoint qui permet de réaliser des acquisitions de signalisation multiples.

Enfin, un système de communication selon l'invention a l'avantage de permettre de s'affranchir de l'utilisation d'une station de base évoluée ou encore d'une entité de type MME (de l'anglais *« Mobility Managment Entity »* pour entité de gestion de la mobilité) et d'une HSS (de l'anglais « Home Subscriber Server ») associée à une infrastructure de télécommunication. Partant, le système de communication selon l'invention permet avantageusement de réaliser une connexion entre deux terminaux de communication mobiles, de préférence en mode direct, sur la base d'une authentification mutuelle au départ, afin d'éviter que des terminaux non désirés ou non-autorisés ne se connectent.

### Selon d'autres caractéristiques avantageuses du système, ce dernier peut inclure facultativement une ou plusieurs des caractéristiques suivantes, seules ou en combinaison :

- La requête d'authentification comporte des données aléatoires ainsi qu'une partie signalisation d'un protocole conforme à la liaison en mode direct.
- Le module mandataire est en outre configuré pour recevoir une réponse d'authentification du terminal de communication mobile distant, ladite réponse d'authentification comportant une partie signalisation d'un protocole conforme à la liaison en mode direct et un résultat d'authentification.
- L'émulateur d'une entité de gestion de la sécurité est en outre configuré pour vérifier la correspondance entre le résultat d'authentification transmis par le terminal de communication mobile distant et un jeton d'authentification généré par la base de données de souscription. Cela permettant une vérification indirecte de la correspondance entre les clés de sécurité mémorisées respectivement sur le coffre-fort électronique du terminal de communication mobile distant et la base de données de souscription du terminal de communication mobile local.
- le terminal de communication mobile local et/ou le terminal de communication mobile distant comporte un coffre-fort électronique adapté pour stocker un identifiant unique respectivement associé audit terminal de communication mobile local et au terminal de communication mobile distant ;
- le module mandataire est configuré pour transporter un message de vérification d'intégrité lors de l'établissement de la communication entre le terminal de communication mobile local et le terminal de communication mobile distant ;
- le terminal de communication mobile local est configuré pour établir une liaison en mode direct avec une pluralité de terminaux de communication mobile distant selon un protocole point à point ou multipoint. En effet, bien que la liaison en mode direct soit le principal sujet de la présente invention, la liaison peut être autre, le but étant d'accéder à un terminal distant 'authentificateur';
- le terminal de communication mobile local est configuré pour permettre la pluralité de terminaux de communication mobile distants de s'authentifier auprès du terminal de communication mobile local disposant de la base de données de souscription et par la suite communiquer entre eux ;
- les terminaux de communication mobile sont configurés de façon à pouvoir utiliser un réseau de communication mobile sélectionné parmi un réseau LTE, 5G, Wimax, 3G, Wifi ou Bluetooth ; Ces technologies sont les technologies préférées ; Néanmoins, la présente invention peut être utilisée avec tout autre technologie 'physique' permettant la mise en œuvre d'un protocole de type point à point ou multipoint et nécessitant au moins une authentification.
- l'émulateur d'une entité de gestion de la sécurité est adapté pour supporter une interface d'accès à la base de données de souscription basée sur une interface de type S6a des normes LTE du consortium 3GPP ;
- le module mandataire est adapté pour supporter une interface d'accès à l'émulateur d'une entité de gestion de la sécurité basée sur un protocole EMM des normes LTE du consortium 3GPP ;
- l'émulateur d'une entité de gestion de la sécurité d'un terminal de communication mobile local est adapté pour permettre au terminal de communication mobile distant de réaliser la requête d'authentification sans passer par l'interface radio d'une station de base. Ainsi, le système peut fonctionner même en cas de dysfonctionnement des stations de base accessibles ;
- le terminal de communication mobile local est configuré pour utiliser un canal radio spécifique pour l'authentification des terminaux de communication mobile distants. L'utilisation d'un canal radio dédié aux authentifications permet de ne pas utiliser les ressources radios des terminaux de communication mobile distants qui communiquent déjà sur un canal radio dédié aux communication.

Selon un autre aspect, l'invention porte sur un procédé d'authentification entre un terminal de communication mobile local et un terminal de communication mobile distant d'un système de communication selon l'invention, pour l'établissement d'une liaison en mode direct entre lesdits terminaux de communication mobiles, ledit procédé comportant les étapes de :
- transmission au terminal de communication mobile local, d'une requête d'authentification sur la base de données de souscription dudit terminal de communication mobile provenant du terminal de communication mobile distant ;
- Transmission, par l'intermédiaire d'un module mandataire du terminal de communication mobile, de la requête d'authentification reçue à l'émulateur de l'entité de gestion de la sécurité dudit terminal de communication mobile local ; et,
- Présentation, à la base de donnée de souscription du terminal de communication mobile, par l'émulateur de l'entité de gestion de la sécurité, de la requête d'authentification provenant du terminal de communication mobile distant, pour l'authentification dudit terminal de communication mobile sur la base de données de souscription du terminal de communication mobile local.

L'invention porte sur un procédé d'authentification d'un terminal de communication mobile distant auprès d'un terminal de communication mobile local, ledit procédé comportant :
- une émission d'un message d'attachement, par le terminal de communication mobile distant, ledit message d'attachement comportant de préférence l'identifiant unique dudit terminal de communication mobile distant ;
- une émission, par le terminal de communication mobile local, d'une requête d'authentification générée à partir d'un vecteur d'authentification, ledit vecteur d'authentification étant généré par une base de données de souscription dudit terminal de communication mobile local, ladite requête d'authentification comportant une partie signalisation d'un protocole conforme à la liaison en mode direct ;
- une émission d'une réponse d'authentification, par le terminal de communication mobile distant, ladite réponse d'authentification comportant une partie signalisation d'un protocole conforme à la liaison en mode direct pour l'authentification dudit terminal de communication mobile distant sur la base de données de souscription dudit terminal de communication mobile local.

En outre, comme cela sera détaillé, ce procédé peut comporter une authentification, par le terminal de communication mobile, du terminal de communication mobile local ; constituant ainsi une authentification mutuelle des terminaux de communication mobiles.

Selon un autre aspect, l'invention concerne un terminal de communication mobile comprenant :
- une base de données de souscription configurée pour mémoriser au moins une clé de sécurité, chacune des clés de sécurité formant un secret partagé entre terminal de communication mobile local et un ou plusieurs terminaux de communication mobile distants et pour générer au moins un vecteur d'authentification à partir de l'au moins une clé de sécurité ;
- un émulateur d'une entité de gestion de la sécurité, configurée pour émuler une interface d'accès à la base de données de souscription dudit terminal de communication mobile local et pour générer une requête d'authentification à partir de l'au moins un vecteur d'authentification ; et,
- un module mandataire configuré pour relayer la requête d'authentification, entre l'émulateur d'une entité de gestion de la sécurité et le terminal de communication mobile distant, ladite requête d'authentification comportant une partie signalisation d'un protocole conforme à la liaison en mode direct, pour l'authentification dudit terminal de communication mobile distant sur la base de données de souscription dudit terminal de communication mobile local.

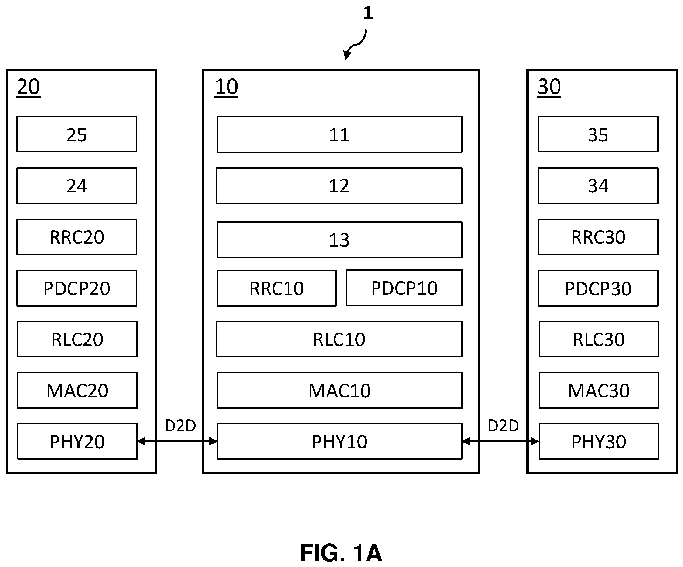

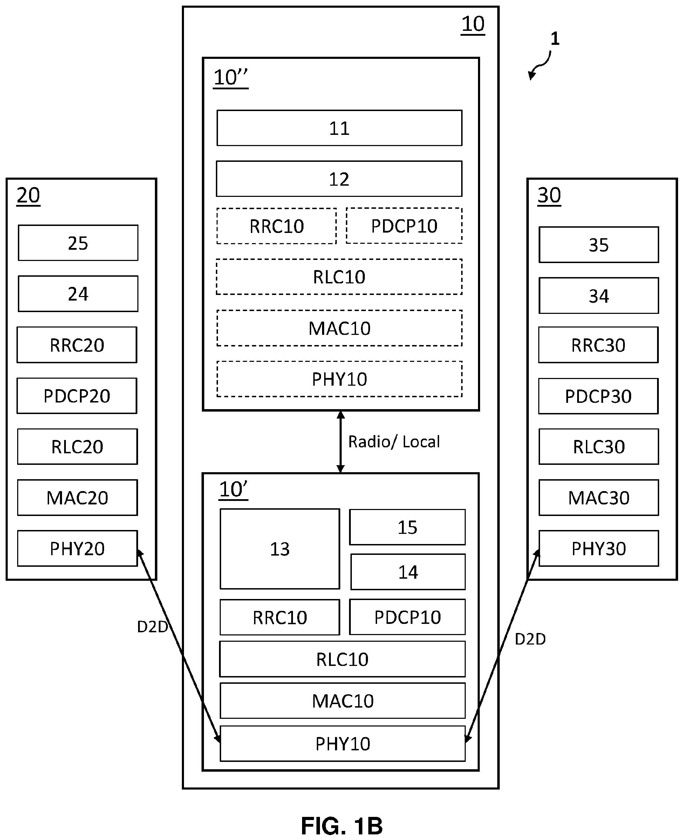

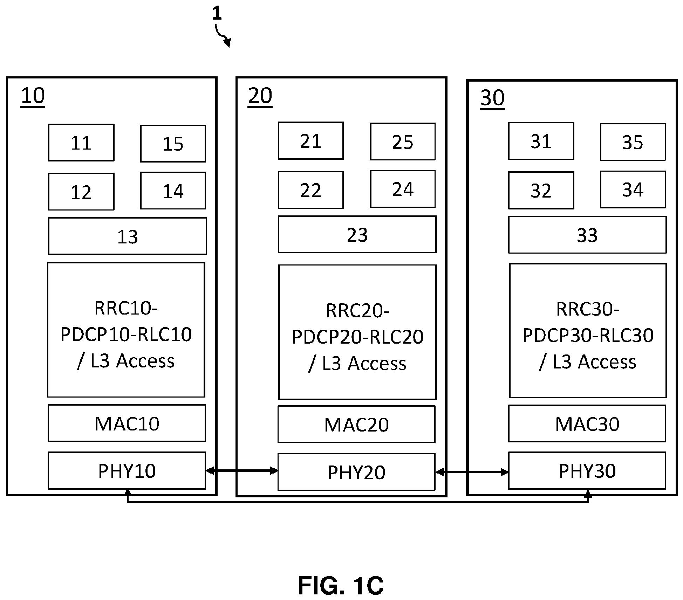

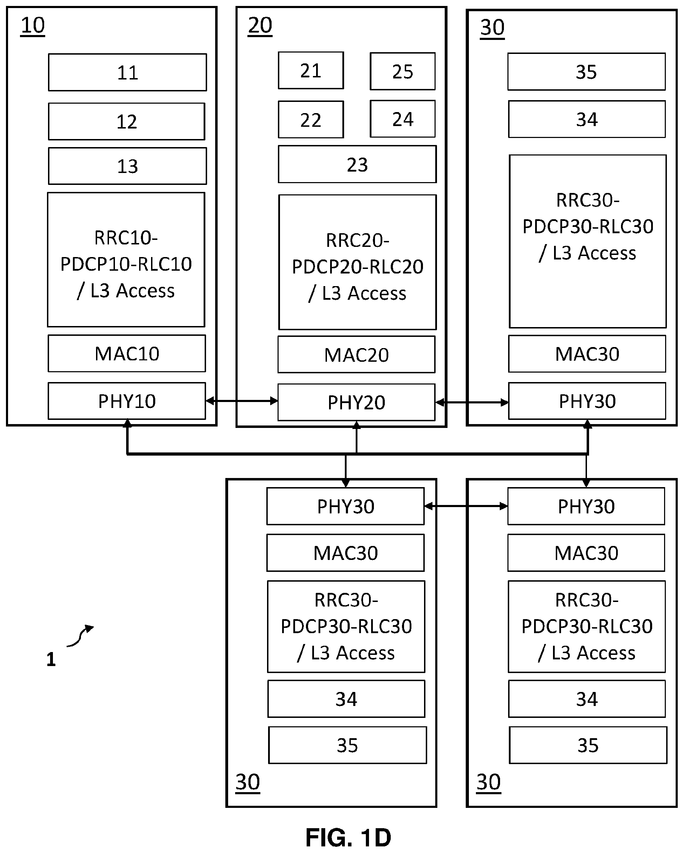

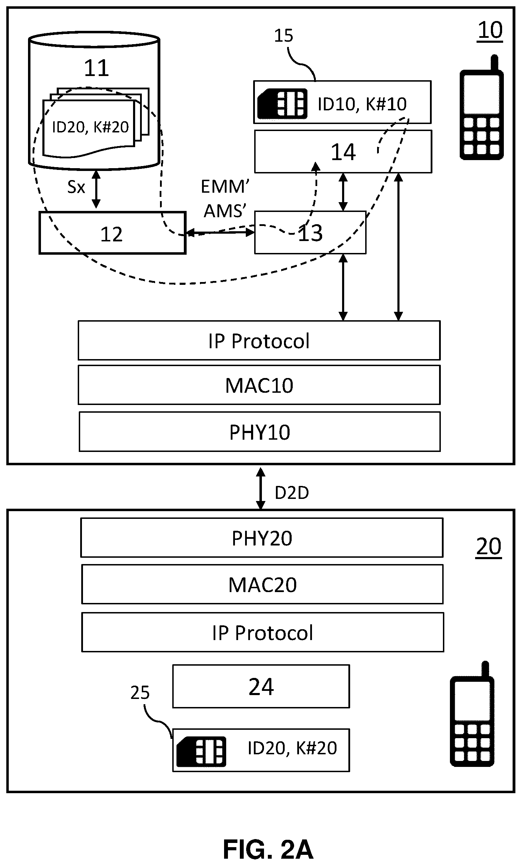

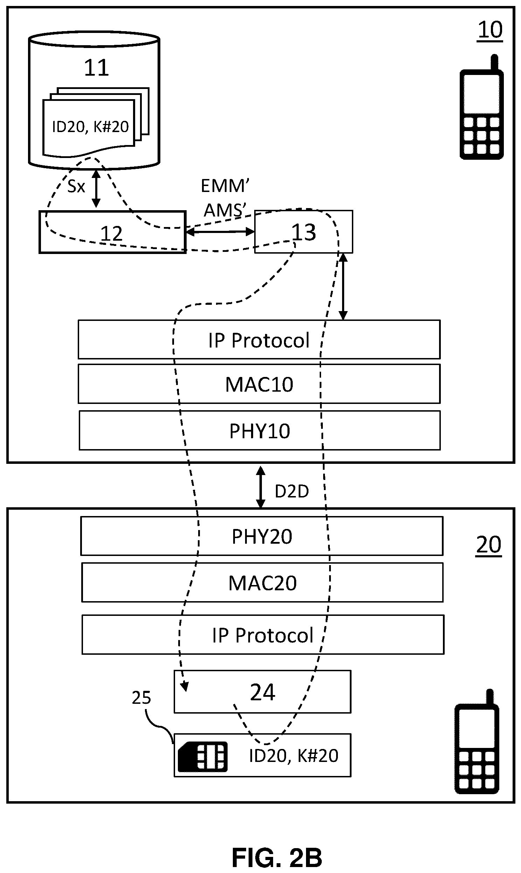

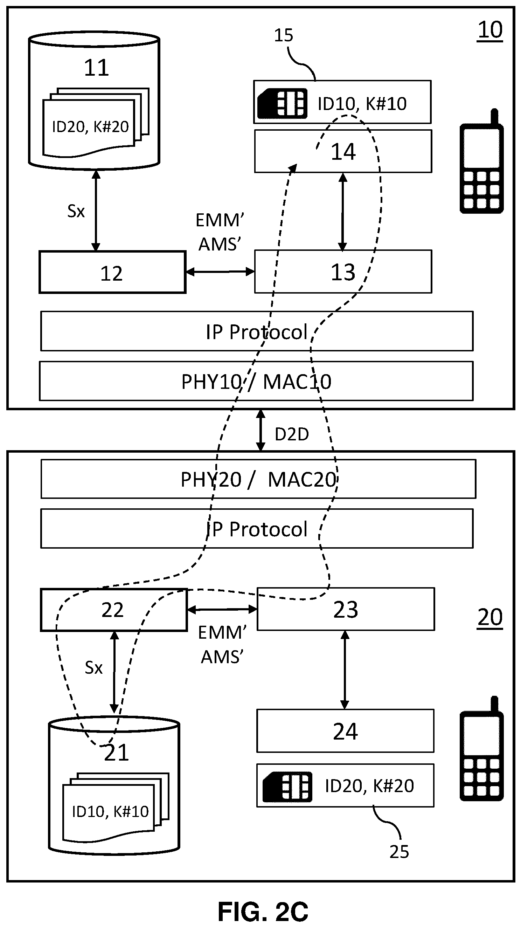

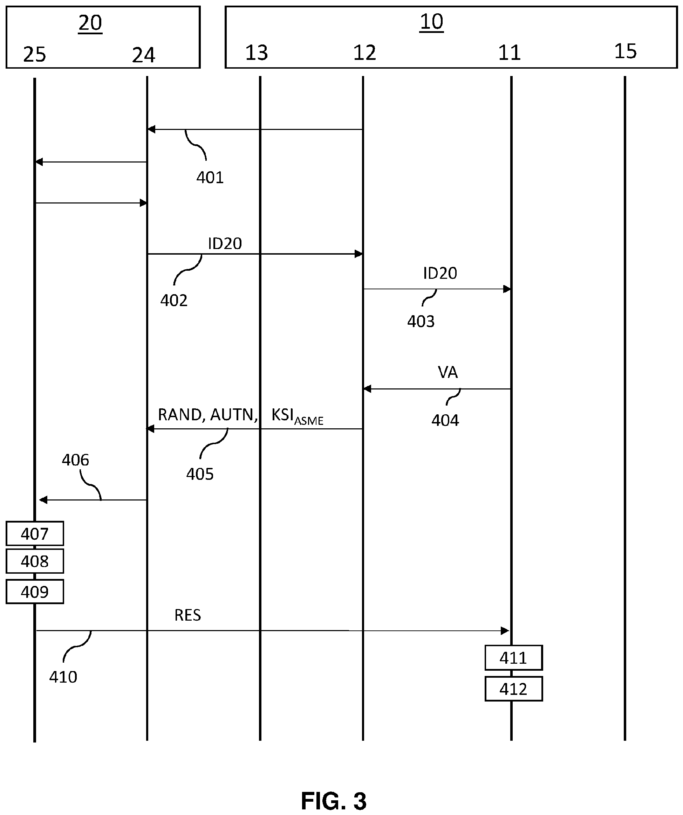

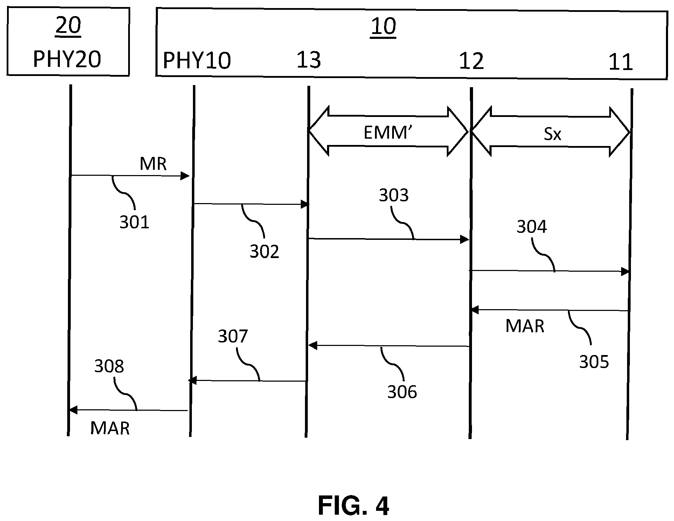

D'autres avantages et caractéristiques de l'invention apparaitront à la lecture de la description suivante donnée à titre d'exemple illustratif et non limitatif, en référence aux figures des dessins annexés dans lesquels :
**La** **figure 1A** représente un schéma illustrant un mode de réalisation d'un système de communication pour lequel un seul terminal de communication mobile comprend une base de données de souscription ;
**La** **figure 1B** représente un schéma illustrant un mode de réalisation d'un système de communication pour lequel un seul terminal de communication mobile comprend une base de données de souscription et ce terminal de communication mobile local est divisé en deux ensembles fonctionnels ;
**La** **figure 1C** représente un schéma illustrant un mode de réalisation d'un système de communication pour lequel chacun des terminaux de communication mobiles comprend une base de données de souscription ;
**La** **figure 1D** représente un schéma illustrant un mode de réalisation d'un système de communication pour lequel une partie des terminaux de communication mobiles comprend une base de données de souscription ;
**La** **figure 2A** est un schéma fonctionnel d'un système de communication comprenant deux terminaux de communication mobiles et illustrant en outre la gestion de l'authentification locale d'un terminal de communication mobile sur sa base de données de souscription ;
**La** **figure 2B** est un schéma fonctionnel d'un système de communication comprenant deux terminaux de communication mobiles et illustrant en outre la gestion de l'authentification distante d'un terminal de communication mobile distant sur la base de données de souscription du terminal de communication mobile local ;
**La** **figure 2C** est un schéma fonctionnel d'un système de communication comprenant deux terminaux de communication mobiles et illustrant en outre la gestion de l'authentification distante du terminal de communication mobile local sur la base de données de souscription d'un terminal de communication mobile distant ;
**La** **figure 3** est un schéma illustrant un procédé d'échanges de secrets partagés entre des terminaux de communication mobiles du système de la figure 1A, pour l'authentification mutuelle desdits terminaux de communication mobiles lors de l'établissement de la liaison en mode direct.
**La** **figure 4** est un schéma illustrant un procédé d'échanges de secrets partagés entre des terminaux de communication mobiles du système de la figure 1A, pour l'authentification desdits terminaux de communication mobiles lors de l'établissement de la liaison en mode direct selon un autre mode de réalisation

### [Description de l'invention]

Le terme « direct » ou l'expression « mode direct » utilisé de manière générale en référence à des modes de communication entre deux entités, signifie qu'aucune entité intermédiaire n'intervient dans ces communications pour le transport de données entre l'entité émettrice et l'entité réceptrice. Une communication en mode direct peut être supportée par une liaison filaire ou radio. Lorsqu'il est utilisé de manière particulière en référence à un mode de communication entre des structures mobiles telles que définies ci-dessus, le terme « direct » signifie que le transport de données entre deux structures mobiles se fait sans l'intervention du cœur de réseau par l'intermédiaire duquel ces structures mobiles pourraient établir leurs communications.

On entend par « terminal de communication mobile », un dispositif informatique permettant le traitement et l'échange de données et comprenant un module d'identification caractérisé par un identifiant unique, tel qu'à titre d'exemple non limitatif une carte USIM (de l'anglais « Universal Indentification Module ») au sens des normes LTE, ou encore une carte e-sim associée au terminal de communication mobile. Une telle carte USIM permet notamment l'identification du terminal de communication mobile et, à cet effet, elle est notamment adaptée pour stocker un identifiant unique du type IMSI (de l'anglais « *International Mobile Subscriber Identity* »). Cet identifiant est associé de manière univoque au terminal de communication mobile. La carte USIM peut être par ailleurs adaptée pour stocker, en outre, au moins une clé de sécurité notée K#10 ou K#20 qui est elle aussi associée au terminal de communication mobile. Plus précisément, chaque terminal de communication mobile est associé à un IMSI authentifié par une clé de sécurité K. En outre, une clé de sécurité K peut être dérivée pour générer une pluralité de clés de sécurité dérivées K' ou KSI_{ASME} qui permettent d'assurer le chiffrement et le contrôle d'intégrité des données échangées avec le terminal de communication mobile. En particulier, une clé peut être dérivée d'une clé primaire.

Dans les revendications, le terme "comprendre" ou "comporter" n'exclut pas d'autres éléments ou d'autres étapes. Les différentes caractéristiques présentées et/ou revendiquées peuvent être avantageusement combinées. Leur présence dans la description ou dans des revendications dépendantes différentes, n'excluent pas cette possibilité. Enfin, les signes de référence aux dessins qui sont présentés entre parenthèses ne sauraient être compris comme limitant la portée de l'invention.

En référence aux schémas des **figures 1A** **et,** **1B****,** **1C****, et** **1D**, il va être décrit différents modes de réalisations d'un système de communication selon l'invention et tout d'abord l'arrangement des terminaux de communication mobiles le composant.

Ainsi, les **figures 1A** **et,** **1B****,** **1C****, et** **1D** illustrent l'empilement des couches de protocoles supportées par des terminaux de communication 10, 20 et/ou 30, selon la représentation en couches du modèle d'interface des systèmes ouverts (ou OSI, de l'anglais « Open System Interface ») de l'ISO (« International Standard Organisation »).

La couche PHY (mis pour couche « PHYsique ») PHY10, PHY20 et PHY30 contrôle le canal de communication physique entre les terminaux de communication mobiles 10, 20, 30. En l'espèce la liaison en mode direct établie entre deux terminaux de communication mobiles 10 et 20 ou 20 et 30 décrits en lien avec les figures 1A, 1B, 1C et 1D utilise un canal radio. Elle implique par exemple l'utilisation de systèmes de modulation/démodulation, de codage, d'entrelacement des données, etc.

La couche MAC (de l'anglais « *Medium Access Control* ») MAC10, MAC20, MAC30 gère l'accès au canal de communication, et le multiplexage sur un même canal de communication et/ou l'ordonnancement entre les différents « services ». Cette couche contrôle la couche sous-jacente, i.e. la couche PHY.

Le canal radio peut supporter dans le cadre de la présente invention une grande diversité de protocole de communication tels que : Wimax, 802.15.x, Wifi direct, bluetooth, 3G, 4G, 5G, Sidelink et/ou Bluetooth. Un terminal de communication mobile selon l'invention peut ainsi, a *minima,* établir une communication selon un mode direct avec un terminal de communication distant en mettant en œuvre tout type de protocole de communication supportés par les couches PHY et MAC du modèle OSI.

Dans un mode de réalisation particulier, un terminal de communication mobile selon l'invention peut comprendre d'autres couches protocolaires, notamment dans le cadre de l'utilisation d'un protocole de communication en lien avec un réseau LTE et défini par les normes 3GPP relatives. Les couches protocolaires basses (i.e. en dessous de la couche application) sont répandues dans les réseaux de communication mobiles tels que les réseaux LTE selon la norme 3GPP, et n'ont donc pas besoin d'être décrites en elles-mêmes ici. Seules leurs fonctions génériques respectives seront donc mentionnées. Les couches protocolaires basses décrites ci-après servent à illustrer certains modes de réalisation de la présente invention et la personne du métier saura que dans le cadre d'un protocole de communication de type Wimax, 802.15.x, Wifi direct, bluetooth, les couches protocolaires basses pourront être différentes.

Ainsi, un terminal de communication mobile peut comprendre, au niveau au-dessus de la couche MAC, la couche RLC (de l'anglais « *Radio link Control* »), représentée RLC10, RLC20, RLC30 sur les figures 1A, 1B, 1C et 1D, opère le découpage des données en « blocs » et la cryptographie de ces données pour assurer la sécurité.

Au même niveau la couche PDCP (de l'anglais « Packet Data Convergence Protocol »), représentée PDCP10, PDCP20, PDCP30 sur les figures 1A, 1B, 1C et 1D, gère le support de différents protocoles réseaux utilisés pour les transmissions, en particulier par l'intermédiaire des en-têtes des paquets de données. La couche PDCP ainsi que la couche RRC décrite ci-après sont susceptibles, suite à l'authentification, d'utiliser et de gérer pour partie l'intégrité et le chiffrement lié au secret partagé (Ki). En particulier, la couche PDCP peut insérer dans l'entête des paquets un numéro de trame (COUNT_I, COUNT_N...) qui permet lors d'un calcul mis en œuvre au niveau applicatif (e.g. algorithme d'intégrité) de générer un mot toujours différent à chaque trame émise. Ceci bloque toute possibilité de rejet. Ainsi, avantageusement, un terminal de communication mobile selon l'invention est configuré pour mettre en œuvre une numérotation des trames associée à une procédure de gestion de l'intégrité. De même, un procédé selon l'invention peut comporter une étape de numérotation des trames associée à une procédure de gestion de l'intégrité.

Enfin, la couche RRC (de l'anglais « *Radio Ressource Control* »), représentée RRC10, RRC20, RRC30 sur les figures 1A, 1B, 1C et 1D, gère l'utilisation des ressources radio faite par un terminal de communication et contrôle les autres couches. En particulier, elle gère la signalisation et la configuration des commandes des couches PHY, MAC, et RLC.

Au niveau de la couche applicative venant par-dessus les couches protocolaires classiques décrites ci-dessus (couches basses), se trouve le code ou logiciel d'application implémentant différentes fonctions nécessaires à la mise en œuvre de la présente invention.

En particulier, le code ou les logiciels d'applications se trouvant par-dessus les couches protocolaires classiques peuvent implémenter :
- une base de données de souscription 11, 21, 31 du terminal de communication mobile 10, 20 ou 30 respectivement ;
- un émulateur d'une entité de gestion de la sécurité 12, 22 ou 32 du terminal de communication mobile 10, 20 ou 30 respectivement ;
- un module mandataire 13, 23 ou 33 du terminal de communication mobile 10, 20, ou 30 respectivement ;
- un module d'accès local 14, 24, 34 du terminal de communication mobile 10, 20, ou 30 respectivement ; et
- un coffre-fort électronique 15, 25, 35 du terminal de communication mobile 10, 20, ou 30 respectivement.

Certains modes de réalisation de ces éléments seront décrits ci-après.

**La base de données de souscription 11, 21, 31** est avantageusement configurée telle une base de données centralisée. Comme cela sera décrit par la suite, dans un système de communication selon l'invention, un seul terminal de communication mobile ou seulement une partie des terminaux de communication mobiles peuvent comporter cette base de données de souscription. En particulier, lorsqu'elle est locale à chaque terminal, elle contient une base de données supportant uniquement les secrets des terminaux de communication mobiles qui ont l'autorisation de se connecter à ce terminal en mode direct. La base de données de souscription 11 peut notamment être implémentée sous la forme de tout code, éléments matériels ou combinaison d'éléments matériels et de code permettant la construction d'une base de données. En particulier, la base de données de souscription 11, 21, 31 peut correspondre à un HSS (de l'anglais « *Home Subscriber Server* ») tel que défini dans la norme 3GPP pour les réseaux LTE ou encore par exemple un système d'authentification de type VLR (de l'anglais « *Visitor Location Register* ») ou encore de type HLR (de l'anglais « *Home location register* »).

Chacune des bases de données de souscription 11, 21, 31 est adaptée pour identifier des terminaux de communication mobiles et pour gérer des informations de sécurité pour l'authentification des terminaux de communication mobiles avec lesquels un terminal de communication mobile pourrait établir une liaison de communication.

En particulier, la base de données de souscription 11 ou 21 de chaque terminal de communication mobile 10 local ou 20 distant, respectivement, stocke les identifiants uniques ID10, ID20 ainsi que les clés de sécurité K#10, K#20 associées. Les clés de sécurité K#10 et K#20 respectivement associées aux terminaux de communication mobiles 10 et 20 peuvent également être stockées dans les bases de données de souscription 11 et 21, respectivement, en plus des identifiants uniques ID10 et ID20 desdits terminaux de communication mobiles 10, 20, respectivement. Cela en particulier pour supporter, outre l'authentification, le chiffrement et la protection de l'intégrité des données à échanger par lesdits terminaux de communication mobiles entre eux.

Le fonctionnement de la base de données de souscription sera décrit plus en détail dans la suite de la description.

**L'émulateur d'une entité de gestion de la sécurité 12, 22, 32** d'un terminal de communication mobile 10, 20, 30 est avantageusement configuré pour permettre, au moyen d'une base de données de souscription 11, une authentification locale du terminal de communication mobile local 10. Elle est également avantageusement configurée pour permettre une authentification distante, de terminaux de communication mobiles distants 20,30, au moyen de la base de données de souscription 11 du terminal de communication mobile local 10. Dans ce cas, c'est le module mandataire 13 qui sert de relai des interfaces de communication. L'émulateur d'une entité de gestion de la sécurité 12 peut notamment être implémenté sous la forme de tout code, éléments matériels ou combinaison d'éléments matériels et de code permettant à un terminal de communication mobile d'émuler une entité de gestion de la sécurité telle que par exemple celle habituellement retrouvée dans un EPC.

Comme pour la base de données de souscription 11, 21, 31, dans un système de communication selon l'invention, un seul terminal de communication mobile ou seulement une partie des terminaux de communication mobiles peuvent comporter cet émulateur d'une entité de gestion de la sécurité 12, 22, 32. Généralement, les terminaux mobiles comportant une base de données de souscription 11, 21, 31 comporteront un émulateur d'une entité de gestion de la sécurité 12, 22, 32.

De façon préférée, l'entité de gestion de la sécurité qui est émulée va être fonction des protocoles de communication mis en œuvre par le système de communication. Par exemple, l'entité de gestion de la sécurité qui est émulée peut être une entité de type MME (de l'anglais « *Mobility Managment Entity* ») en référence aux normes LTE ou de type S4-SGSN ou encore AMF (« Authentification and Mobility Function » en terminologie anglosaxonne). L'entité MME est l'équipement des réseaux LTE qui gère la signalisation (plan de contrôle, ou « C-plane » en anglais) entre les terminaux de communication mobile (UE) et le cœur de réseau LTE. De façon générale, l'émulateur d'une entité de gestion de la sécurité 12, 22, 32 est configuré de façon à émuler une interface normée Sx entre ledit émulateur 12, 22, 32 et la base de données de souscription 11, 21, 31 d'un terminal de communication mobile qu'il soit local 10 ou distant 20, 30.

De façon plus préférée, l'émulateur d'une entité de gestion de la sécurité 12, 22, 32 est configuré pour supporter une interface de type relai_Sx, telle qu'une interface relai_S6a', transportée par un protocole de communication en mode direct tel qu'un protocole de communication D2D (en partie signalisation). Cela permet aux terminaux de communication mobiles distants de réaliser une requête d'authentification auprès de la base de données de souscription 11, 21, 31 locale.

En particulier, l'émulateur d'une entité de gestion de la sécurité 12, 22, 32 est en outre configuré pour assurer la gestion de la sécurité des communications du terminal de communication mobile 10, 20, 30. Ces émulateurs d'une entité de gestion de la sécurité sont adaptées pour dialoguer avec la base de données de souscription 11, 21, 31, respectivement, du terminal de communication mobile 10, 20, 30 correspondant, respectivement, afin d'obtenir et de stocker des informations de sécurité associées aux terminaux de communication mobiles avant l'établissement d'une communication selon un mode direct. Ces émulateurs d'une entité de gestion de la sécurité 12, 22, 32 peuvent en particulier générer et gérer des requêtes d'authentification (Authentication-Information-Request en terminologie anglo-saxonne) et leur réponse, via un message de vérification d'intégrité, afin d'obtenir de la base de données de souscription des vecteurs d'authentification. Le(s) vecteur(s) d'authentification sert(servent) à faire une authentification unitaire limitée dans le temps. De façon préférée, la prochaine authentification utilisera un autre vecteur, mais la même clé pour jouer l'algorithme (soit la primaire, soit la dérivée, le résultat étant en principe le même).

En outre, l'émulateur de l'entité de gestion de la sécurité 12, 22, 32 d'un terminal de communication mobile 10, 20, 30 peut aussi être adapté pour supporter, outre l'authentification, le chiffrement et la protection de l'intégrité des données à échanger par les terminaux de communication mobiles 10, 20, 30 entre eux. La procédure suivie est alors la même que celle décrite ici pour l'authentification mutuelle des terminaux de communication mobiles 10, 20, 30. En outre, l'intégrité et le chiffrement des données peuvent être l'intégrité et le chiffrement pour des données de signalisation et des données utiles. Par exemple, l'intégrité et le chiffrement dans le plan C-plane et le chiffrement dans le plan U-plane, respectivement, des normes LTE du consortium 3GPP.

Dans un exemple non-limitatif, une telle interface d'accès peut être une interface de type S6a telle qu'elle est définie dans les normes LTE du consortium 3GPP. Une interface de type S6a, sans être exactement identique à une interface S6a, pourra être compatible avec les modules, organes et protocoles configurés pour interagir avec une interface S6a. Son fonctionnement sera décrit plus en détail dans la suite de la description.

**Le module mandataire 13, 23, 33** d'un terminal de communication mobile 10 local ou distant 20,30 a notamment pour fonction de relayer une requête d'authentification émanant d'un terminal de communication mobile 20 distant, jusqu'à une base de données de souscription 11 du terminal de communication 10 local, via l'émulateur d'une entité de gestion de la sécurité 12 dudit terminal de communication mobile. En d'autres termes, le module mandataire 13 d'un terminal de communication mobile 10, 20, 30 permet un accès distant afin d'autoriser des terminaux de communication mobiles distants à s'authentifier à la base de données de souscription 11 via l'émulateur d'une entité de gestion de la sécurité 12. En particulier, le module mandataire 13 peut être en relai des interfaces D2D avec les terminaux de communication mobile distants. Le module mandataire 13 peut notamment être implémenté sous la forme de tout code, éléments matériels ou combinaison d'éléments matériels et de code permettant à un terminal de communication mobile de relayer des requêtes, par l'intermédiaire d'un réseau de communication, entre un émulateur d'une entité de gestion de la sécurité de terminal de communication mobile et d'autre terminaux de communication mobiles distant.

Le module mandataire 13, 23, 33 aussi appelé proxy ou module proxy par raccourci dans ce qui suit, est de façon préférée adapté pour transporter à l'émulateur 12, 22, 32 du terminal de communication mobile 10, 20, 30 correspondants, respectivement, des requêtes d'authentification issues d'un terminal de communication mobile distant. De façon plus préférée, le module mandataire 13 d'un terminal de communication mobile 10 est adapté pour transporter un message d'authentification issue d'un autre terminal de communication mobile 20, 30 jusqu'à l'émulateur d'une entité de gestion de la sécurité 12 du terminal de communication mobile 10, pour l'authentification dudit autre terminal de communication mobile 20, 30 sur la base de données de souscription 11 du terminal de communication mobile 10.

Dans un mode de réalisation particulier du système, l'interface d'accès à l'émulateur de l'entité de gestion de la sécurité 12, 22 de chaque terminal de communication mobile 10, 20 qui est supportée par le module mandataire 13, 23 peut être une interface propriétaire qui est basée sur le protocole EMM des normes LTE du consortium 3GPP. Une telle interface propriétaire est notée EMM' dans la suite.

Le fonctionnement du module mandataire 13, 23, 33 sera décrit plus en détail dans la suite de la description.

Additionnellement, chaque terminal de communication mobile peut comprendre en outre un **module d'accès local 14, 24, 34** qui est adapté pour permettre l'accès à son coffre-fort électronique 15, 25 ou 35, respectivement. En effet, l'homme du métier appréciera que les terminaux de communication mobiles 10 et 20 peuvent être configurés comme des terminaux mobiles standards, et donc avoir un coffre-fort électronique 15, 25, respectivement tel qu'à titre d'exemple non limitatif une carte USIM (de l'anglais « Universal Indentification Module ») au sens des normes LTE.

**Le coffre-fort électronique 15,25,35** d'un terminal de communication mobile 10 local ou 20, 30 distant peut correspondre à titre d'exemple non limitatif à une carte USIM (de l'anglais « Universal Indentification Module ») au sens des normes LTE. Une telle carte USIM peut être utilisée lors de l'identification du terminal de communication mobile et, à cet effet, elle est notamment adaptée pour stocker un identifiant unique, noté ID10, ID20 dans la suite et dans les figures, avantageusement mais non limitativement du type IMSI (de l'anglais « *International Mobile Subscriber Identity* ») ou IMEI (de l'anglais « International Mobile Equipment Identity »). Cet identifiant est associé de manière univoque au terminal de communication correspondant. Plus précisément, chaque terminal de communication mobile est avantageusement associé à un identifiant unique, tel que par exemple un IMSI, authentifié par une clé de sécurité. La carte USIM, ou plus généralement le coffre-fort électronique, peut être par ailleurs adaptée pour stocker, en outre, au moins une clé de sécurité notée K#10, K#20 qui est elle aussi associée au terminal de communication mobile correspondant. Des clés de sécurité dérivées de cette clé de sécurité K#20 peuvent être utilisées pour chiffrer les données transmises, et pour garantir leur intégrité. Les clés de sécurité K#10 et K#20 respectivement associées aux terminaux de communication mobiles 10 et 20 peuvent être mémorisées par les bases de données de souscription 11 et 21, respectivement. Cela en particulier pour supporter, outre l'authentification, le chiffrement et la protection de l'intégrité des données à échanger par lesdits terminaux de communication mobiles entre eux.

Ainsi, de façon préférée, le coffre-fort électronique 15, 25, 35 est défini par les spécifications 3GPP TS 21.111. Il prend la forme, par exemple, d'une carte à puce. Il stocke des informations permettant l'authentification de l'abonné (un « abonné » correspondant à un terminal de communication mobile) lors d'une connexion du terminal de communication mobile au réseau tel qu'une clé de sécurité K#10, K#20 et un identifiant unique ID10, ID20.

Les **figures 1A** **et** **1B** illustrent deux modes de réalisation d'un système de communication selon l'invention dans lesquels le terminal de communication mobile 10 local est le seul terminal à comporter une base de données de souscription 11, un émulateur d'une entité de gestion de la sécurité 12, et un module mandataire 13, 23, 33. Dans ce cas, les terminaux de communication mobiles 20, 30 distants pourront s'authentifier auprès du terminal de communication mobile 10 local. Comme illustré les communications entre les terminaux de communication mobiles 20, 30 distants et le terminal de communication mobile 10 local peuvent être des communications de type « device to device » (terminologie anglosaxonne pouvant correspondre à appareil à appareil).

Comme illustré à la figure 1B, le terminal de communication mobile 10 local peut être divisé en deux ensembles fonctionnels 10',10". Un premier ensemble fonctionnel 10' pourra comporter un module mandataire 13, un module d'accès local 14 et un coffre-fort électronique 15. Ainsi, étant donné que ce premier ensemble 10' comporte un module d'accès local 14 et un coffre-fort électronique 15 il pourra, en cas de connexion fonctionnelle, s'authentifier directement auprès d'un cœur de réseau. En outre, il comporte un module mandataire 13 qui pourra être configuré pour gérer l'adressage les requêtes d'authentification au second ensemble fonctionnel 10" qui, comportant une base de données de souscription 11 et un émulateur d'une entité de gestion de la sécurité 12, pourra être configuré pour réaliser les authentifications des terminaux de communication mobiles 20 distants et réaliser une authentification locale. La connexion entre les deux ensembles fonctionnels 10', 10" pourra être une connexion locale, filaire ou radio.

Pour permettre aux terminaux de communication mobiles de gérer de manière autonome, c'est-à-dire indépendamment d'équipements fixe du cœur de réseau, leur authentification mutuelle, via une liaison en mode direct pour établir une liaison de transport de données, chaque terminal de communication mobile 10 local et 20 distant peuvent intégrer plusieurs entités spécifiques. Au niveau local de chaque terminal de communication mobile, le rôle de ces entités est de permettre à une entité de liaison distante (i.e. appartenant à un autre terminal de communication mobile, ou plus généralement à un terminal de communication mobile distant) de s'authentifier auprès de la base de données de données de souscription du terminal de communication mobile local. En référence à la **figure 1C****,** dans un mode de réalisation, un système de radiocommunication selon l'invention peuvent comporter des terminaux de communication mobiles 10, 20, 30 chacun équipé d'une base de données de souscription 11, 21, 31, d'un émulateur d'une entité de gestion de la sécurité 12, 22, 32 et d'un module mandataire 13, 23, 33. Au sein de ce système, les terminaux de communication mobiles selon l'invention sont connectés via une liaison en mode direct, respectant de préférence un protocole de communication normé D2D adapté à l'établissement d'une telle liaison.

En outre, les terminaux de communication mobiles 10, 20, 30 peuvent être chacun équipé d'un module d'accès local 14, 24, 34 et d'un coffre-fort électronique 15,25,35. Ainsi, les terminaux de communication mobiles peuvent être configurés comme des terminaux mobiles standards. En effet, dans un mode de réalisation, les terminaux de communication mobiles sont configurés pour pouvoir établir, sous couverture, une connexion au cœur de réseau et ainsi assurer l'authentification du terminal, et lui permettre d'obtenir des clés dérivées. L'invention prend dans ce cas tout son intérêt lorsqu'une telle authentification n'est pas possible (i.e. perte de l'accès aux équipements fixes d'un cœur de réseau assurant normalement cette fonction). La liaison en mode direct assure une authentification entre les différents terminaux de communication mobiles 10 et 20 nonobstant leur éloignement hors de la portée, ou la panne ou la destruction, d'équipements fixes d'un cœur de réseau assurant normalement cette fonction.

En référence à la **figure 1D****,** le système 1 de communication selon l'invention peut comporter :
- au moins un terminal de communication mobile 10, comportant une base de données de souscription 11, un émulateur d'une entité de gestion de la sécurité 12, et un module mandataire 13 mais ne comportant pas de coffre-fort électronique 15 ;
- au moins un terminal de communication mobile 20, comportant une base de données de souscription 21, un émulateur d'une entité de gestion de la sécurité 22, un module mandataire 23, un module d'accès local 24 et un coffre-fort électronique 25 ;
- plusieurs terminaux de communication mobiles 30, comportant un module d'accès local 34 et un coffre-fort électronique 35 mais ne comportant pas de base de données de souscription, d'émulateur d'une entité de gestion de la sécurité, ni de module mandataire.

En effet, pour mettre en œuvre l'invention, l'essentiel est qu'au moins un des terminaux mobiles de communication comporte une base de données de souscription 21, un émulateur d'une entité de gestion de la sécurité 22, un module mandataire 23.

En référence aux **figures 2A****,** **2B** **et** **2C****,** il va maintenant être décrit plusieurs modes de réalisation d'un système de radiocommunication mobile ayant des terminaux de communication mobiles 10, 20 chacun équipé ou non d'une base de données de souscription 11, 21. Dans ces modes de réalisation, les terminaux de communication 10 et/ou 20 supportent en outre une couche protocolaire « IP protocol » pour protocole IP, situé au niveau 3 dans le modèle OSI, et permettant un service d'adressage unique pour l'ensemble desdits terminaux de communication. Il sera en particulier fait référence au processus d'authentification des terminaux mobiles en fonction des situations.

En particulier, la **figure 2A** décrit une authentification locale utile par exemple dans le cas où seul un terminal de communication mobile 10 local est équipé d'une base de données de souscription 11, d'un émulateur d'une entité de gestion de la sécurité 12, et d'un module mandataire 13. Dans ce cas, comme illustré par la flèche en pointillée, le module d'accès local 14 accède au coffre-fort électronique 15 et en interface avec l'USIM par exemple émet une requête de type requête d'attachement. Cette requête d'attachement est transmise par le module mandataire 13 à l'émulateur d'une entité de gestion de la sécurité 12 selon un protocole d'échange adéquate tel qu'un protocole d'échange de type protocole de gestion de la mobilité (« EPS mobility Management » en terminologie anglosaxonne) EMM' ou AMS' (« Access system Modem baseband Subsystem» en terminologie anglosaxonne).

L'émulateur de l'entité de gestion de la sécurité 12 peut lancer une procédure d'authentification, sur un format de type Sx, en demandant à la base de données de souscription 11 des vecteurs d'authentification puis va transmettre la requête d'authentification vers le module d'accès local 14 grâce au module mandataire 13. Le module d'accès local 14 pourra alors transmettre un message de réponse d'authentification. Bien que non représenté, plusieurs échanges de messages peuvent être supportés par le système de radiocommunication mobile et en particulier le terminal de communication mobile 10 local pour finaliser l'authentification locale.

La **figure 2B** décrit une authentification mutuelle initiée par un terminal de communication mobile 20 distant auprès d'un terminal de communication mobile 10 local. Comme cela est illustré, dans ce cas, le terminal de communication mobile 20 distant peut ne pas comporter ni de base de données de souscription, ni d'émulateur d'une entité de gestion de la sécurité, et ni de module mandataire. Le terminal de communication mobile 10 local est quant à lui équipé d'une base de données de souscription 11, d'un émulateur d'une entité de gestion de la sécurité 12, et d'un module mandataire 13.

Dans ce cas, comme illustré par la flèche en pointillée, le module d'accès local 24 accède au coffre-fort électronique 25 et en interface avec l'USIM par exemple émet une requête de type requête d'attachement. Cette requête d'attachement est transmise au module mandataire 13 du terminal de communication mobile 10 local. En particulier, cette requête d'attachement est transmise selon un protocole de communication de type mode direct. Le module mandataire 13 transmet la requête à l'émulateur d'une entité de gestion de la sécurité 12 selon un protocole d'échange adéquate par exemple EMM' ou AMS'. L'émulateur de l'entité de gestion de la sécurité 12 peut lancer une procédure d'authentification, sur un format de type Sx, en demandant à la base de données de souscription 11 des vecteurs d'authentification puis va transmettre la requête d'authentification au module mandataire 13. Le module mandataire 13 transmet alors des données d'authentification, par exemple sous le format d'une requête d'authentification, au module d'accès local 24 du terminal de communication mobile 20 distant.

Une requête d'authentification comportera des éléments d'authentification permettant au destinataire de prouver sa légitimité. Ces éléments d'authentification pourront avantageusement comporter des données aléatoires ainsi qu'une partie signalisation d'un protocole conforme à la liaison en mode direct. Comme cela sera décrit par la suite, le module d'accès local 24 pourra en interface avec le coffre-fort électronique 25 calculer un résultat, vérifier le sceau d'authentification du terminal de communication mobile 10 local, et éventuellement calculer une clé. Le module d'accès 24 pourra alors transmettre un message de réponse d'authentification. Bien que non représenté, plusieurs échanges de messages peuvent être supportés par le système de radiocommunication mobile entre le terminal de communication mobile 10 local et le terminal de communication mobile 20 distant pour finaliser l'authentification mutuelle de ces deux terminaux de communication mobile.

L'homme du métier appréciera que, la base de données de souscription 11 et l'émulateur d'une entité de gestion de la sécurité 12 du terminal de communication mobile 10 ne sont pas intégrés à un cœur de réseau. Ainsi, la présente invention permet une authentification mutuelle sécurisée de terminaux de communication mobile en l'absence d'un accès à un cœur de réseau.

Ainsi, un système 1 de communication selon l'invention permet une authentification mutuelle entre un terminal de communication mobile 10 local et un terminal de communication mobile 20 distant pour l'établissement d'une liaison en mode direct. Avantageusement, de nombreux terminaux communication mobiles 20 distants peuvent tous s'authentifier auprès d'un même terminal disposant de la base de données de souscription 11 et par la suite communiquer entre eux.

La **figure 2C** décrit une authentification mutuelle initiée par un terminal de communication mobile 10 local auprès d'un terminal de communication mobile 20 distant. Comme cela est illustré, dans ce cas, le terminal de communication mobile 20 distant peut comporter une base de données de souscription 21, un émulateur d'une entité de gestion de la sécurité 22, un module mandataire 23, un module d'accès local 24 et un coffre-fort électronique 25. Le terminal de communication mobile 10 local est également équipé de ces briques.

Dans ce cas, comme illustré par la flèche en pointillée, le module d'accès local 14 accède au coffre-fort électronique 15 et en interface avec l'USIM par exemple émet une requête de type requête d'attachement. Cette requête d'attachement est transmise directement au module mandataire 23 du terminal de communication mobile 20 distant ou par l'intermédiaire du module mandataire 13 du terminal de communication mobile 10 local.

Avantageusement, le terminal de communication mobile 10 local est configuré pour que la requête d'attachement passe par le module mandataire 13. En effet, le module mandataire 13 pourra alors être configuré pour sélectionner une authentification distante ou locale en fonction du nombre de terminaux de communication mobiles présents (mode local afin de limiter la charge radio) ou alternativement pour de prérogatives de plus grande sécurité opérationnelle (mode distant).

En particulier, cette requête d'attachement est transmise selon un protocole de communication de type mode direct au terminal de communication mobile 20 distant. Le module mandataire 23 peut transmettre la requête à l'émulateur d'une entité de gestion de la sécurité 22 du terminal de communication mobile 20 distant selon un protocole d'échange adéquate par exemple EMM' ou AMS'. L'émulateur de l'entité de gestion de la sécurité 22 du terminal de communication mobile 20 distant peut lancer une procédure d'authentification, sur un format de type Sx, en demandant à la base de données de souscription 21, du terminal de communication mobile 20 distant, des vecteurs d'authentification, puis va transmettre une requête d'authentification au module mandataire 23 du terminal de communication mobile 20 distant. Le module mandataire 23 transmet alors la requête d'authentification au module d'accès local 14 du terminal de communication mobile 10 local. Comme cela sera décrit par la suite, le module d'accès local 14 pourra en interface avec le coffre-fort électronique 15 calculer un résultat, vérifier le sceau d'authentification du terminal de communication mobile 20 distant, et éventuellement calculer une clé, comme par exemple une clé K_{ASME}. Le module d'accès 14, du terminal de communication mobile 10 local, pourra alors transmettre un message de réponse d'authentification. Bien que non représenté, plusieurs échanges de messages peuvent être supportés par le système de radiocommunication mobile entre le terminal de communication mobile 10 local et le terminal de communication mobile 20 distant pour finaliser l'authentification mutuelle de ces deux terminaux de communication mobile.

Finalement, l'émulateur de l'entité de gestion de la sécurité 12 d'un terminal de communication mobile 10 local et le module mandataire 13 associé sont adaptés pour permettre à un terminal de communication mobile 20 distant de réaliser une requête d'authentification sur la base de données de souscription 11 dudit terminal de communication mobile 10 local ou vice-versa. Ainsi, dans l'exemple représenté à la figure 2C, lors de l'établissement d'une liaison en mode direct entre les terminaux de communication mobiles 10 et 20, les modules mandataire 13 et 23 et les émulateurs de l'entité de gestion de sécurité 12 et 22 permettent aux deux terminaux de communication mobiles 10, 20, respectivement, de s'authentifier mutuellement, i.e. de réaliser des échanges de secrets partagés, uniquement en échangeant indirectement avec la base de données de souscription 11, 21, respectivement, de l'autre terminal de communication mobiles 10, 20. A cet effet, la base de données 21 du terminal de communication mobile 20 distant stocke l'identifiant unique ID10 du terminal de communication mobile 10 local.

De façon préférée, l'interface notée Sx dans les figures 2A, 2B, et 2C, peut-être une interface propriétaire de type S6a' pour soit :
- l'échange des procédures de sécurité, à partir d'une lecture et d'un accès local pour l'authentification locale à la base de données de souscription du terminal de communication mobile local ; soit
- l'autorisation des terminaux de communication mobiles distant à s'authentifier à la base de données de souscription 11 locale via l'émulateur de l'entité de gestion de la sécurité 12. Dans ce cas, le module mandataire est en relai de (des) interfaces D2D avec le (les) terminaux de communication mobiles distant.

**Selon un autre aspect,** l'invention porte sur un **procédé d'authentification,** de préférence mutuelle, entre un terminal de communication mobile 10 local et un terminal de communication mobile 20 distant pour l'établissement d'une liaison en mode direct entre lesdits terminaux de communication. Un tel procédé peut de préférence être mis en œuvre par un terminal de communication mobile 10 local selon l'invention et en particulier dans un système 1 de communication selon l'invention.

De façon succincte, un procédé d'authentification selon l'invention peut comporter trois étapes principales :
- une émission d'un message d'attachement, par le terminal de communication mobile 20 distant, ledit message d'attachement comportant de préférence l'identifiant unique ID20 dudit terminal de communication mobile distant ; En particulier, en 5G 3GPP, l'identifiant unique (IMSI ou équivalent) peut lui-même être transmis chiffré (SUCI, « Subscription Concealed Identifier » en terminologie anglosaxonne) ;
- une émission, par le terminal de communication mobile 10 local, d'une requête d'authentification générée à partir d'un vecteur d'authentification VA, ledit vecteur d'authentification VA à partir de l'au moins une clé de sécurité étant généré par une base de données de souscription 11 dudit terminal de communication mobile local ; de préférence la requête d'authentification comporte un élément aléatoire constituant un élément d'authentification ;
- une authentification, par le terminal de communication mobile 20, du terminal de communication mobile 10 local ;
- une émission d'une réponse d'authentification, par le terminal de communication mobile 20 distant, ladite réponse d'authentification comportant une partie signalisation d'un protocole conforme à la liaison en mode direct pour l'authentification dudit terminal de communication mobile 20 distant sur la base de données de souscription 11 dudit terminal de communication mobile 10 local.

En référence à la **figure 3****,** il va maintenant être décrit les échanges de secrets partagés entre les terminaux de communication mobiles du système présenté à la figure 1A.

Les différentes étapes décrites plus loin sont réalisées en particulier entre deux terminaux de communication mobiles 10, 20. Plus spécifiquement, la figure 3 montre la procédure d'authentification mutuelle des deux terminaux de communication mobiles 10, 20 comportant un accès à la base de données de souscription 11 d'un terminal de communication mobile 10 local selon l'invention. Le terminal de communication mobile 20 distant peut recevoir une ou plusieurs demandes d'authentification 401 du terminal de communication mobile 10 local et en particulier de l'émulateur d'une entité de gestion de la sécurité 12. Le terminal de communication mobile 20 distant peut répondre en envoyant 402 son identifiant unique ID20 tel que son IMSI et/ou IMEI suivant la demande. De plus, en 5G, le SUCI, l'équivalent de l'IMSI, peut être envoyé sous forme chiffrée pour éviter d'être lu en clair sur les échanges préliminaires qui ne sont pas chiffrés (car avant la procédure d'authentification elle-même). Le résultat au moment de l'authentification sera du même type sauf à base d'un SUCI chiffré et non d'un IMSI en clair.

Alternativement, le terminal de communication mobile 20 distant peut initier une première connexion de type RRC avec le terminal de communication mobile 10 local. Ainsi, la procédure d'authentification peut être issue du terminal de communication mobile 20 distant en premier ou du terminal de communication mobile 10 local en premier. De façon préférée, le terminal de communication mobile 10 local initiera une procédure d'authentification après réception d'un message du terminal de communication mobile 20 comportant par exemple son numéro d'identification unique.

De plus, le système de communication selon l'invention peut être configuré de façon à ce que tous les terminaux de communication mobiles local ou distant aient mémorisé une même clé de sécurité. Cela peut être notamment le cas lorsqu'un seul groupe de terminaux est géré par le système de communication selon l'invention. En effet, si un seul groupe de terminaux est utilisé, alors tous les terminaux disposeront d'une même clé de sécurité et dériveront donc une même clé. En général, on évite d'avoir une clé unique pour identifier les terminaux pour des raisons de contamination. Par contre, la mémorisation d'une clé commune dans le cadre de la présente invention est utile pour un service partagé par tous les terminaux (déjà identifies individuellement). En général, c'est une clé différente de celle associé à l'identifiant unique (e.g. IMSI, SUCI) et elle peut correspondre à un service de type appel de groupe. En outre, l'envoi de l'identifiant du terminal de communication mobile distant peut ne pas être essentiel.

Sur réception de l'IMSI du terminal de communication mobile 20 distant, l'émulateur d'une entité de gestion de la sécurité 12 du terminal de communication mobile 10 local fait une demande 403 de vecteurs d'authentification VA à sa base de données de souscription 11 (e.g. « Home Subscriber Server » en terminologie anglosaxonne). La base de données de souscription 11 pourra retourner un ou plusieurs vecteurs d'authentification VA qui comprendront chacun des paramètres de sécurité, ou des éléments d'authentification, qui seront fonction d'une clé de sécurité K#20 mémorisée sur la base de données de souscription 11 et associée à l'identifiant du terminal de communication mobile 20 distant. La base de données de souscription 11 pourra retourner un ou plusieurs vecteurs d'authentification VA qui comprendront chacun des paramètres de sécurité, ou éléments d'authentification, RAND, AUTNHSS, et XRES qui seront fonction d'une clé de sécurité K#20 mémorisée sur la base de données de souscription 11 et associée à l'identifiant du terminal de communication mobile 20 distant. La base de données de souscription 11 pourra également retourner un ou plusieurs vecteurs d'authentification VA qui comprendront chacun un paramètre de sécurité de type K_{ASME} fonction d'une clé de sécurité K#20 mémorisée sur la base de données de souscription 11 et associée à l'identifiant du terminal de communication mobile 20 distant.

Ces paramètres de sécurité ou éléments d'authentification comportent :
RAND : un nombre aléatoire ;
AUTNHSS : un jeton d'authentification utilisable par le terminal de communication mobile 20 distant et en particulier le coffre-fort numérique 25 pour authentifier le terminal de communication mobile 10 local ; et/ou
XRES : le résultat de l'authentification du terminal de communication mobile 20 distant selon une clé de sécurité connue par le HSS (laquelle est aussi enregistrée sur l'UICC pour « *universal integrated circuit card »* selon une terminologie anglo-saxonne). XRES est le résultat calculé au niveau du réseau à partir du RAND et des paramètres connus de l'UE (pour *« user equipment »* selon une terminologie anglo-saxonne) et peut également constituer un élément d'authentification idoine.

Ces paramètres de sécurité ou éléments d'authentification peuvent comporter K_{ASME} : une clé de dérivation calculée à partir notamment d'une clé de chiffrement (CK) et d'une clé d'intégrité (IK).

Il est important que les éléments d'authentification transmis soient différents à chaque allumage de la base de données de souscription 11 et en particulier à chaque requête d'authentification pour des raisons évidentes de sécurité. Pour cela, la variation des paramètres RAND/AUTNHSS du vecteur d'authentification VA lors de chaque allumage permet d'assurer que cette clé change.

Des algorithmes Milenage peuvent être utilisé mais ils peuvent être remplacés par d'autres algorithme (l'architecture est indépendante de ces algorithmes, il importe juste que la base de données de souscription 11 et les coffre-fort électroniques 15 utilisent les mêmes algorithmes).

L'émulateur d'une entité de gestion de la sécurité 12 choisit l'un des vecteurs d'authentification VA reçus 404 de la base de données de souscription 11. En outre, il calcul un paramètre KSI_{ASME} (« Key Set Identifier Access Security Management Entity » en terminologie anglosaxonne) qui correspond à l'index de la clé K_{ASME}.

L'émulateur d'une entité de gestion de la sécurité 12 transmet 405 au terminal de communication mobile 20 distant les informations RAND, AUTNHSS et KSI_{ASME} associées au vecteur choisi. Cela correspond aux seuls éléments nécessaires permettant au terminal de communication mobile 20 distant d'authentifier le terminal de communication mobile 10 local (AUTNHSS), la variable aléatoire RAND permettant au terminal de communication mobile 20 distant de calculer son jeton d'authentification XRES et le KSI_{ASME} permettant au terminal de communication mobile 20 distant de calculer les clés de chiffrement et d'intégrité.

Ces informations sont transmises 406 par le module d'accès local 24 au coffre-fort numérique 25 qui, sur réception de RAND et AUTNHSS et KSI_{ASME} :
- calcule 407 les informations RES, AUTN_{dist} par exemple au moyen des algorithmes Milenage contenus dans une carte SIM ;
- vérifie 408 que la valeur AUTN reçue est identique à la valeur AUTN_{dist} calculée ce qui lui assure que le terminal de communication mobile 10 local est authentifié ; Si les deux valeurs sont identiques, le terminal de communication mobile 20 distant authentifie le terminal de communication mobile 10 local et sauvegarde le paramètre KSI_{ASME} comme un index pour calculer K_{ASME} ;
- utilise 409 la valeur du paramètre KSI_{ASME} pour calculer la clé K_{ASME} qui pourra être utilisée comme clé « mère » pour dériver d'autres clés de chiffrement telles que CK et CI ;
- renvoie 410 la valeur RES au terminal de communication mobile 10 local.

Sur réception de RES, le terminal de communication mobile 10 local compare 411 la valeur reçue avec une valeur XRES du vecteur d'authentification initial.

Si ces valeurs sont identiques, le terminal de communication mobile 10 local considère le terminal de communication mobile 20 distant comme authentifié et utilise 412 alors la clé K_{ASME} contenue dans le vecteur initial comme clé de dérivation.

Ainsi, la procédure d'authentification mutuelle permet, par un échange final, d'assurer au terminal de communication mobile 10 local, que le terminal de communication mobile 20 distant est bien authentifié alors que le terminal de communication mobile 20 distant dès la demande initiale sait que le terminal de communication mobile 10 local est bien valide (étape 408).

En complément, des exemples de modes opératoires peuvent être les suivants :
- un terminal de communication mobile 10 local par groupe dispose de la base de données de souscription 11, pas les autres.
- tous les terminaux de communication mobile 20, 30 distants s'authentifient auprès de ce terminal de communication mobile 10 local (qui avantageusement dispose d'un canal radio spécifique pour ne pas utiliser les ressources radios des terminaux qui communiquent déjà).
- Sur le lieu de communication, le terminal de communication mobile 10 local disposant de la base de données de souscription 11 reste présent, permettant à des terminaux de communication mobile nouveaux d'intégrer un groupe en s'authentifiant.

Alternativement, un terminal de communication mobile 10 local unique dispose de la base de données de souscription 11 et, quel que soit le groupe auquel appartient un terminal de communication mobile 20 distant, il s'authentifie auprès de ce terminal de communication mobile 10 local qui n'est pas présent sur le lieu d'opération, mais uniquement au lancement de l'opération lors de l'allumage des terminaux de communication mobile 20 distants.

Ces mécanismes n'excluent pas que deux terminaux de communication mobiles 20 distant issus d'un même groupe puissent communiquer indépendamment sur un autre canal avec une clé de chiffrement spécifique. Il suffit par exemple que les terminaux de communication mobile soient configurés pour pouvoir dériver une clé à partir de la clé de chiffrement du groupe (elle-même dérivée de la clé native) en prenant en tant que paramètre le numéro du canal.

Il faut noter que dans les échanges, la clé K_{ASME} n'a jamais transité sur le lien radio. Les valeurs identiques AUTN reçu / AUTN calculé, côté terminal de communication mobile 20 distant, et RES / XRES, côté terminal de communication mobile 10 local, assurent que la clé K_{ASME} est bien identique entre les deux terminaux de communication mobile radios dialoguant.

Le terminal de communication mobile 20 distant dérive la clé K_{ASME} à partir de CK, IK, KSI_{ASME} (reçu de l'émulateur d'une entité de gestion de la sécurité 12). Le KSI_{ASME} envoyé par l'émulateur d'une entité de gestion de la sécurité 12 peut permettre par la suite au terminal de communication mobile 20 distant et à l'émulateur d'une entité de gestion de la sécurité 12 d'identifier la clé native K_{ASME} sans avoir à refaire une procédure d'authentification lors de nouvelles connexions.

De même, les clés CK et IK ne sont jamais transmises par la base de données de souscription 11 à l'émulateur d'une entité de gestion de la sécurité 12 mais restent toujours internes.

Pour identifier le terminal de communication mobile 10 local ou plus particulièrement la base de données de souscription 11, les méthodes peuvent être multiples. Citons des exemples de mise en œuvre possible :
- le terminal de communication mobile 20 distant est configuré avec une ou plusieurs adresses IP de terminaux de communication mobile susceptibles d'héberger une base de données de souscription 11. Cette base est en outre identifiée par un numéro de port spécifique ;
- alternativement la base de données de souscription 11 dispose de sa propre adresse IP, les requêtes sont transmises par routage dans le terminal hébergeant la base de données de souscription 11 ;
- alternativement le terminal de communication mobile 20 distant fait une requête en mode broadcast. Un ou des terminaux hébergeant la base de données de souscription 11peuvent alors répondre ; et
- alternativement, sans utiliser une adresse IP, mais comme dans les normes 3GPP, l'entête des messages indique le service (RR, MM, CC, GMM, RRC...).

Comme illustré à la figure 4, dans un autre mode de réalisation, un procédé d'authentification selon l'invention peut comporter en particulier une étape de transmission 301, à un terminal de communication mobile 10 local, d'une requête d'authentification MR sur la base de données de souscription 11 dudit terminal de communication mobile 10 local, ladite requête d'authentification MR provenant d'un terminal de communication mobile 20 distant et passant par le module mandataire 13 du terminal de communication mobile 10 local.

Cette requête d'authentification MR peut en particulier être transmise, lors d'une étape 302, à un module mandataire 13 du terminal de communication 10 local.

Lors de l'étape 303, le module mandataire 13, transmet à son tour la requête d'authentification MR à un émulateur d'une entité de gestion de la sécurité 12 du terminal de communication mobile 10 local. Comme il a déjà été dit plus haut en référence à la figure 2, cette transmission EMM' peut, dans un exemple non-limitatif, utiliser une interface propriétaire basée sur le protocole EMM des normes LTE du consortium 3GPP.

Lors de l'étape 304, l'émulateur d'une entité de gestion de la sécurité 12 du terminal de communication mobile 10 local présente la requête d'authentification MR à une base de données de souscription 11 du terminal de communication mobile 10 local. Cette transmission Sx se fait, par exemple, via une interface d'accès standard de type S6a, ou S6d ou une interface propriétaire, ainsi qu'il a été exposé plus haut en référence à la figure 2. Cette présentation est en particulier configurée de façon à permettre l'authentification du terminal de communication mobile 20 distant sur la base de données de souscription 11 du terminal de communication mobile 10 local.

De façon préférée, lors d'une étape 305, la base de données de souscription 11 du terminal de communication mobile 10 local émet en retour des informations d'authentification dudit terminal de communication mobile 10 local, sous la forme d'un message de vérification d'intégrité MAR, et transmet ces informations d'authentification, via l'interface d'accès, à l'émulateur d'une entité de gestion de la sécurité 12 du terminal de communication mobile 10 local.

Lors de l'étape 306, l'émulateur de l'entité de gestion de la sécurité 12 transmet les informations d'authentification au module mandataire 13 du terminal de communication mobile 10 local.

Lors de l'étape 307, le module mandataire 13 du terminal de communication mobile 10 local transmet les informations d'authentification au terminal de communication mobile 10 local de structure mobile.

Enfin, lors de l'étape 308, le terminal de communication mobile 10 local transmet, via la liaison en mode direct, lesdites informations d'authentification, sous la forme d'un message de vérification d'intégrité MAR, au terminal de communication mobile 20 distant.

Avantageusement, mais non limitativement, un message de vérification d'intégrité est émis, par le terminal de communication mobile 10 local, suite à la réception d'une requête d'authentification MR vers le terminal de communication mobile ayant émis ladite requête d'authentification. Un tel message de vérification d'intégrité encode alors une donnée relative au succès ou à l'échec de l'authentification du terminal de communication mobile 20 distant auprès du terminal de communication mobile 10 local. La communication de données entre le terminal de communication mobile 20 distant et le terminal de communication mobile 10 local pourra avantageusement être assujettie à la réception dudit message de vérification d'intégrité par le terminal de communication mobile 20 distant.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en œuvre par la personne du métier à la lecture de la présente description et des dessins annexés.

Dans tous les cas de figure décrits plus hauts, les terminaux de communication mobiles 10, 20 sont reliés entre eux par des liaisons en mode direct et peuvent ainsi former un réseau de transport de données. Le réseau peut avoir une structure maillée. Avantageusement, un tel réseau peut se substituer à un réseau fixe lorsqu'il est hors de portée radio, détruit ou inopérant. En outre, chaque terminal de communication mobile peut aussi être configurée pour que les liaisons en mode direct établis avec un ou plusieurs terminaux de communication mobiles distant utilisent un protocole de type point-multipoint.

## Revendications

1. Système de communication (1) comprenant un terminal de communication mobile (10) local et un terminal de communication mobile (20) distant,
ledit terminal de communication mobile (20) distant comportant un coffre-fort électronique (25) configuré pour mémoriser au moins une clé de sécurité (K#20),
ledit terminal de communication mobile (10) local étant configuré pour établir une liaison en mode direct avec ledit terminal de communication mobile (20) distant,
ledit système de communication (1) étant **caractérisé en ce que** ledit terminal de communication mobile (10) local comporte :
- une base de données de souscription (11) configurée pour mémoriser au moins une clé de sécurité (K#20), chacune des clés de sécurité formant un secret partagé entre un terminal de communication mobile (10) local et un ou plusieurs terminaux de communication mobile (20) distants et pour générer au moins un vecteur d'authentification (VA) à partir de l'au moins une clé de sécurité;
- un émulateur d'une entité de gestion de la sécurité (12), configurée pour émuler une interface d'accès (Sx) à la base de données de souscription (11) dudit terminal de communication mobile (10) local et pour générer une requête d'authentification à partir de l'au moins un vecteur d'authentification (VA) ; et,
- un module mandataire (13) configuré pour relayer la requête d'authentification, entre l'émulateur d'une entité de gestion de la sécurité (12) et le terminal de communication mobile (20) distant, ladite requête d'authentification comportant une partie signalisation d'un protocole conforme à la liaison en mode direct, pour l'authentification dudit terminal de communication mobile (20) distant sur la base de données de souscription (11) dudit terminal de communication mobile (10) local.

2. Système de communication (1) selon la revendication 1, **caractérisé en ce que** la requête d'authentification comporte des données aléatoires ainsi qu'une partie signalisation d'un protocole conforme à la liaison en mode direct.

3. Système de communication (1) selon l'une quelconque des revendications 1 ou 2, **caractérisé en ce que** le module mandataire (13) est en outre configuré pour recevoir une réponse d'authentification du terminal de communication mobile (20) distant, ladite réponse d'authentification comportant une partie signalisation d'un protocole conforme à la liaison en mode direct et un résultat d'authentification (RES).

4. Système de communication (1) selon la revendication 3, **caractérisé en ce que** l'émulateur d'une entité de gestion de la sécurité (12) est en outre configuré pour vérifier la correspondance entre le résultat d'authentification (RES) transmis par le terminal de communication mobile (20) distant et un jeton d'authentification (XRES) généré par la base de données de souscription (11).

5. Système de communication (1) selon l'une quelconque des revendications 1 à 4, **caractérisé en ce que** le terminal de communication mobile (10) local et/ou le terminal de communication mobile (20) distant comportent un coffre-fort électronique (15,25) adapté pour stocker un identifiant unique (ID10, ID20) respectivement associé audit terminal de communication mobile (10) local et au terminal de communication mobile (20) distant.

6. Système de communication (1) selon l'une quelconque des revendications précédentes **caractérisé en ce que** le module mandataire (13) est configuré pour transporter un message de vérification d'intégrité lors de l'établissement de la communication entre le terminal de communication mobile (10) local et le terminal de communication mobile (20) distant.

7. Système de communication (1) selon l'une quelconque des revendications précédentes **caractérisé en ce que** le terminal de communication mobile (10) local est configuré pour établir une liaison en mode direct avec une pluralité de terminaux de communication mobile (20) distants selon un protocole point à point ou multipoint.

8. Système de communication (1) selon la revendication 7, **caractérisé en ce que** le terminal de communication mobile (10) local est configuré pour permettre à la pluralité de terminaux de communication mobile (20) distants de s'authentifier auprès du terminal de communication mobile (10) local disposant de la base de données de souscription (11) et par la suite communiquer entre eux.

9. Système de communication (1) selon l'une quelconque des revendications précédentes, **caractérisé en ce que** les terminaux de communication mobile (10,20) sont configurés de façon à pouvoir utiliser un réseau de communication mobile sélectionné parmi un réseau LTE, 5G, Wimax, 3G, Wifi ou Bluetooth.

10. Système de communication selon l'une quelconque des revendications précédentes, **caractérisé en ce que** l'émulateur d'une entité de gestion de la sécurité (12,22) est adapté pour supporter une interface d'accès à la base de données de souscription (11,21) basée sur une interface de type S6a des normes LTE du consortium 3GPP.

11. Système de communication (1) selon l'une quelconque des revendications précédentes, **caractérisé en ce que** le module mandataire (13,23) est adapté pour supporter une interface d'accès à l'émulateur d'une entité de gestion de la sécurité (12,22) basée sur un protocole EMM des normes LTE du consortium 3GPP.

12. Système de communication (1) selon l'une quelconque des revendications 1 à 11, dans lequel l'émulateur d'une entité de gestion de la sécurité (12) du terminal de communication mobile (10) local est adapté pour permettre au terminal de communication mobile (20) distant de réaliser la requête d'authentification sans passer par l'interface radio d'une station de base.

13. Système de communication (1) selon l'une quelconque des revendications 1 à 12, dans lequel le terminal de communication mobile (10) local est configuré pour utiliser un canal radio spécifique pour l'authentification des terminaux de communication mobile (20, 30) distants.

14. Procédé d'établissement, par un terminal de communication mobile (10) local, d'une liaison en mode direct avec un terminal de communication mobile (20) distant,
ledit terminal de communication mobile (10) local comprenant une base de données de souscription (11) configurée pour mémoriser au moins une clé de sécurité (K#20), chacune des clés de sécurité formant un secret partagé entre ledit terminal de communication mobile (10) local et un ou plusieurs terminaux de communication mobile (20) distants, ledit terminal de communication mobile (20) distant comprenant un coffre-fort électronique (25) configuré pour mémoriser au moins une clé de sécurité (K#20) et ledit procédé de communication comprenant au moins une itération des étapes suivantes :
• génération par ladite base de données de souscription (11) au moins un vecteur d'authentification (VA) à partir de l'au moins une clé de sécurité,
• émulation une interface d'accès (Sx) à la base de données de souscription (11) dudit terminal de communication mobile (10) local par un émulateur d'une entité de gestion de la sécurité (12) compris dans terminal de communication mobile (10) local,
• génération d'une requête d'authentification par ledit émulateur d'une entité de gestion de la sécurité à partir de l'au moins un vecteur d'authentification (VA), ladite requête d'authentification comportant une partie signalisation d'un protocole conforme à la liaison en mode direct, pour l'authentification dudit terminal de communication mobile (20) distant sur la base de données de souscription (11) dudit terminal de communication mobile (10) local, et
• relais de ladite requête d'authentification, entre l'émulateur d'une entité de gestion de la sécurité (12) et le terminal de communication mobile (20) distant.

15. Terminal de communication mobile (10) comprenant :
- une base de données de souscription (11) configurée pour mémoriser au moins une clé de sécurité (K#20), chacune des clés de sécurité formant un secret partagé entre un terminal de communication mobile (10) local et un ou plusieurs terminaux de communication mobile (20) distants et pour générer au moins un vecteur d'authentification (VA) à partir de l'au moins une clé de sécurité (K#20) ;
- un émulateur d'une entité de gestion de la sécurité (12), configurée pour émuler une interface d'accès (Sx) à la base de données de souscription (11) dudit terminal de communication mobile (10) local et pour générer une requête d'authentification à partir de l'au moins un vecteur d'authentification (VA) ; et,
- un module mandataire (13) configuré pour relayer la requête d'authentification, entre l'émulateur d'une entité de gestion de la sécurité (12) et le terminal de communication mobile (20) distant, ladite requête d'authentification comportant une partie signalisation d'un protocole conforme à la liaison en mode direct, pour l'authentification dudit terminal de communication mobile (20) distant sur la base de données de souscription (11) dudit terminal de communication mobile (10) local.

## Patentansprüche

1. Kommunikationssystem (1), umfassend ein lokales mobiles Kommunikationsendgerät (10) und ein entferntes mobiles Kommunikationsendgerät (20),
wobei das entfernte mobile Kommunikationsendgerät (20) einen elektronischen Tresor (25) vorweist, der zum Speichern mindestens eines Sicherheitsschlüssels (K#20) konfiguriert ist,
wobei das lokale mobile Kommunikationsendgerät (10) zum Herstellen einer Direktmodusverbindung mit dem entfernten mobilen Kommunikationsendgerät (20) konfiguriert ist,
wobei das Kommunikationssystem (1)
**dadurch gekennzeichnet ist, dass** das lokale mobile Kommunikationsendgerät (10) vorweist:
- eine Abonnementdatenbank (11), die zum Speichern mindestens eines Sicherheitsschlüssels (K#20), wobei jeder der Sicherheitsschlüssel ein gemeinsames Geheimnis zwischen einem lokalen mobilen Kommunikationsendgerät (10) und einem oder mehreren entfernten mobilen Kommunikationsendgeräten (20) ausbildet, und zum Generieren mindestens eines Authentifizierungsvektors (VA) aus dem mindestens einen Sicherheitsschlüssel konfiguriert ist;
- einen Emulator einer Sicherheitsverwaltungsentität (12), der zum Emulieren einer Zugriffsschnittstelle (Sx) zu der Abonnementdatenbank (11) des lokalen mobilen Kommunikationsendgeräts (10) und zum Generieren einer Authentifizierungsanfrage aus dem mindestens einen Authentifizierungsvektor (VA) konfiguriert ist; und,
- ein Proxymodul (13), das zum Weiterleiten der Authentifizierungsanfrage zwischen dem Emulator einer Sicherheitsverwaltungsentität (12) und dem entfernten mobilen Kommunikationsendgerät (20) konfiguriert ist, wobei die Authentifizierungsanfrage einen Signalisierungsteil eines Protokolls gemäß der Direktmodusverbindung für die Authentifizierung des entfernten mobilen Kommunikationsendgeräts (20) an der Abonnementdatenbank (11) des lokalen mobilen Kommunikationsendgeräts (10) vorweist.

2. Kommunikationssystem (1) nach Anspruch 1,
**dadurch gekennzeichnet, dass** die Authentifizierungsanfrage Zufallsdaten sowie einen Signalisierungsteil eines Protokolls gemäß der Direktmodusverbindung vorweist.

3. Kommunikationssystem (1) nach einem der Ansprüche 1 oder 2,
**dadurch gekennzeichnet, dass** das Proxy-Modul (13) ferner zum Empfangen einer Authentifizierungsantwort von dem entfernten mobilen Kommunikationsendgerät (20) konfiguriert ist, wobei die Authentifizierungsantwort einen Signalisierungsteil eines Protokolls gemäß der Direktmodusverbindung und ein Authentifizierungsergebnis (RES) vorweist.

4. Kommunikationssystem (1) nach Anspruch 3,
**dadurch gekennzeichnet, dass** der Emulator einer Sicherheitsverwaltungsentität (12) ferner zum Verifizieren der Übereinstimmung zwischen dem Authentifizierungsergebnis (RES), das durch das entfernte mobile Kommunikationsendgerät (20) übertragen wird, und einem Authentifizierungstoken (XRES), das durch die Abonnementdatenbank (11) erzeugt wird, konfiguriert wird.

5. Kommunikationssystem (1) nach einem der Ansprüche 1 bis 4,
**dadurch gekennzeichnet, dass** das lokale mobile Kommunikationsendgerät (10) und/oder das entfernte mobile Kommunikationsendgerät (20) einen elektronischen Tresor (15, 25) vorweisen, der zum Speichern einer eindeutigen Kennung (ID10, ID20) angepasst ist, die jeweils dem besagten lokalen mobilen Kommunikationsendgerät (10) und dem entfernten mobilen Kommunikationsendgerät (20) zugeordnet ist.

6. Kommunikationssystem (1) nach einem der vorstehenden Ansprüche,
**dadurch gekennzeichnet, dass** das Proxy-Modul (13) zum Übermitteln einer Integritätsverifikationsnachricht während der Herstellung der Kommunikation zwischen dem lokalen mobilen Kommunikationsendgerät (10) und dem entfernten mobilen Kommunikationsendgerät (20) konfiguriert ist.

7. Kommunikationssystem (1) nach einem der vorstehenden Ansprüche,
**dadurch gekennzeichnet, dass** das lokale mobile Kommunikationsendgerät (10) zum Herstellen einer Direktmodusverbindung mit einer Vielzahl von entfernten mobilen Kommunikationsendgeräten (20) gemäß einem Punkt-zu-Punkt- oder Mehrpunktprotokoll konfiguriert ist.

8. Kommunikationssystem (1) nach Anspruch 7,
**dadurch gekennzeichnet, dass** das lokale mobile Kommunikationsendgerät (10) zum Ermöglichen der Vielzahl von entfernten mobilen Kommunikationsendgeräten (20) sich gegenüber dem lokalen mobilen Kommunikationsendgerät (10), das über die Abonnementdatenbank (11) verfügt, zu authentifizieren und anschließend miteinander zu kommunizieren.

9. Kommunikationssystem (1) nach einem der vorstehenden Ansprüche,
**dadurch gekennzeichnet, dass** die mobilen Kommunikationsendgeräte (10, 20) konfiguriert sind, um ein mobiles Kommunikationsnetzwerk verwenden zu können, das aus einem LTE-, 5G-, Wimax-, 3G-, Wifi- oder Bluetooth-Netzwerk ausgewählt ist.

10. Kommunikationssystem nach einem der vorstehenden Ansprüche,
**dadurch gekennzeichnet, dass** der Emulator einer Sicherheitsverwaltungsentität (12, 22) zum Unterstützen einer Zugriffsschnittstelle auf die Abonnementdatenbank (11, 21) angepasst ist, die auf einer Schnittstelle vom Typ S6a der LTE-Standards des 3GPP-Konsortiums basiert.

11. Kommunikationssystem (1) nach einem der vorstehenden Ansprüche,
**dadurch gekennzeichnet, dass** das Proxymodul (13, 23) zum Unterstützen einer Zugriffsschnittstelle auf den Emulator einer Sicherheitsverwaltungsentität (12, 22), basierend auf einem EMM-Protokoll der LTE-Standards des 3GPP-Konsortiums, angepasst ist.

12. Kommunikationssystem (1) nach einem der Ansprüche 1 bis 11, wobei der Emulator einer Sicherheitsverwaltungsentität (12) des lokalen mobilen Kommunikationsendgeräts (10) zum Ermöglichen, dass das entfernte mobile Kommunikationsendgerät (20) die Authentifizierungsanfrage durchführt, ohne die Funkschnittstelle einer Basisstation zu durchlaufen, angepasst ist.

13. Kommunikationssystem (1) nach einem der Ansprüche 1 bis 12, wobei das lokale mobile Kommunikationsendgerät (10) zum Verwenden eines spezifischen Funkkanals für die Authentifizierung der entfernten mobilen Kommunikationsendgeräte (20, 30) konfiguriert ist.

14. Verfahren zum Herstellen, durch ein lokales mobiles Kommunikationsendgerät (10), einer Direktmodusverbindung mit einem entfernten mobilen Kommunikationsendgerät (20),
das lokale mobile Kommunikationsendgerät (10) umfassend eine Abonnementdatenbank (11) zum Speichern mindestens eines Sicherheitsschlüssels (K#20) konfiguriert ist, wobei jeder der Sicherheitsschlüssel ein gemeinsames Geheimnis zwischen dem lokalen mobilen Kommunikationsendgerät (10) und einem oder mehreren entfernten mobilen Kommunikationsendgeräten (20) ausbildet, das entfernte mobile Kommunikationsendgerät (20) umfassend einen elektronischen Tresor (25), der zum Speichern mindestens eines Sicherheitsschlüssels (K#20) konfiguriert ist, und das Kommunikationsverfahren umfassend mindestens eine Iteration der folgenden Schritte:
• Generieren, durch die Abonnementdatenbank (11), mindestens eines Authentifizierungsvektors (VA) aus dem mindestens einen Sicherheitsschlüssel,
• Emulieren einer Zugriffsschnittstelle (Sx) zu der Abonnementdatenbank (11) des lokalen Mobilkommunikationsendgeräts (10) durch einen Emulator einer Sicherheitsverwaltungsentität (12), der in dem lokalen Mobilkommunikationsendgerät (10) umfasst ist,
• Generieren einer Authentifizierungsanfrage durch den Emulator einer Sicherheitsverwaltungsentität aus dem mindestens einen Authentifizierungsvektor (VA), wobei die Authentifizierungsanfrage einen Signalisierungsteil eines Protokolls gemäß der Direktmodusverbindung zum Authentifizieren des entfernten mobilen Kommunikationsendgeräts (20) auf der Abonnementdatenbank (11) des lokalen mobilen Kommunikationsendgeräts (10) vorweist und
• Weiterleiten der Authentifizierungsanfrage zwischen dem Emulator einer Sicherheitsverwaltungsentität (12) und dem entfernten mobilen Kommunikationsendgerät (20).

15. Mobiles Kommunikationsendgerät (10), umfassend:
- eine Abonnementdatenbank (11), die zum Speichern mindestens eines Sicherheitsschlüssels (K#20), wobei jeder der Sicherheitsschlüssel ein gemeinsames Geheimnis zwischen einem lokalen mobilen Kommunikationsendgerät (10) und einem oder mehreren entfernten mobilen Kommunikationsendgeräten (20) ausbildet, und zum Generieren mindestens eines Authentifizierungsvektors (VA) aus dem mindestens einen Sicherheitsschlüssel (K#20) konfiguriert ist;
- einen Emulator einer Sicherheitsverwaltungsentität (12), die zum Emulieren einer Zugriffsschnittstelle (Sx) zu der Abonnementdatenbank (11) des lokalen mobilen Kommunikationsendgeräts (10) und zum Generieren einer Authentifizierungsanfrage aus dem mindestens einen Authentifizierungsvektor (VA) konfiguriert ist; und,
- ein Proxymodul (13), das zum Weiterleiten der Authentifizierungsanfrage zwischen dem Emulator einer Sicherheitsverwaltungsentität (12) und dem entfernten mobilen Kommunikationsendgerät (20) konfiguriert ist, wobei die Authentifizierungsanfrage einen Signalisierungsteil eines Protokolls gemäß der Direktmodusverbindung für die Authentifizierung des entfernten mobilen Kommunikationsendgeräts (20) an der Abonnementdatenbank (11) des lokalen mobilen Kommunikationsendgeräts (10) vorweist.

## Claims

1. A communication system (1) comprising a local mobile communication terminal (10) and a remote mobile communication terminal (20),
said remote mobile communication terminal (20) comprising an electronic safe (25) configured to store at least one security key (K#20),
said local mobile communication terminal (10) being configured to establish a direct mode link with said remote mobile communication terminal (20),
said communication system (1) being **characterised in that** said local mobile communication terminal (10) comprises:
- a subscription database (11) configured to store at least one security key (K#20), each of the security keys forming a shared secret between a local mobile communication terminal (10) and one or more remote mobile communication terminals (20) and to generate at least one authentication vector (VA) from the at least one security key;
- a security management entity emulator (12), configured to emulate an access interface (Sx) to the subscription database (11) of said local mobile communication terminal (10) and to generate an authentication request from the at least one authentication vector (VA); and,
- a proxy module (13) configured to relay the authentication request, between the security management entity emulator (12) and the remote mobile communication terminal (20), said authentication request comprising a signalling part of a protocol compliant with the direct mode link, for authentication of said remote mobile communication terminal (20) on the subscription database (11) of said local mobile communication terminal (10).

2. The communication system (1) according to claim 1, **characterised in that** the authentication request comprises random data as well as a signalling part of a protocol compliant with the direct mode link.

3. The communication system (1) according to any one of claims 1 or 2, **characterised in that** the proxy module (13) is further configured to receive an authentication response from the remote mobile communication terminal (20), said authentication response comprising a signalling part of a protocol compliant with the direct mode link and an authentication result (RES).

4. The communication system (1) according to claim 3, **characterised in that** the security management entity emulator (12) is further configured to verify the correspondence between the authentication result (RES) transmitted by the remote mobile communication terminal (20) and an authentication token (XRES) generated by the subscription database (11).

5. The communication system (1) according to any one of claims 1 to 4, **characterised in that** the local mobile communication terminal (10) and/or the remote mobile communication terminal (20) comprise an electronic safe (15, 25) adapted to store a unique identifier (ID10, ID20) respectively associated with said local mobile communication terminal (10) and with the remote mobile communication terminal (20).

6. The communication system (1) according to any one of the preceding claims, **characterised in that** the proxy module (13) is configured to carry an integrity verification message during establishment of the communication between the local mobile communication terminal (10) and the remote mobile communication terminal (20).

7. The communication system (1) according to any one of the preceding claims, **characterised in that** the local mobile communication terminal (10) is configured to establish a direct mode link with a plurality of remote mobile communication terminals (20) according to a point-to-point or multipoint protocol.

8. The communication system (1) according to claim 7, **characterised in that** the local mobile communication terminal (10) is configured to allow the plurality of remote mobile communication terminals (20) to authenticate with the local mobile communication terminal (10) having the subscription database (11) and subsequently communicate with each other.

9. The communication system (1) according to any one of the preceding claims, **characterised in that** the mobile communication terminals (10, 20) are configured to be able to use a mobile communication network selected from among an LTE, 5G, Wimax, 3G, Wifi or Bluetooth network.

10. The communication system according to any one of the preceding claims, **characterised in that** the security management entity emulator (12, 22) is adapted to support an access interface to the subscription database (11, 21) based on an S6a type interface of the LTE standards of the 3GPP consortium.

11. The communication system (1) according to any one of the preceding claims, **characterised in that** the proxy module (13, 23) is adapted to support an access interface to the security management entity emulator (12, 22) based on an EMM protocol of the LTE standards of the 3GPP consortium.

12. The communication system (1) according to any one of claims 1 to 11, wherein the security management entity emulator (12) of the local mobile communication terminal (10) is adapted to allow the remote mobile communication terminal (20) to perform the authentication request without passing through the radio interface of a base station.

13. The communication system (1) according to any one of claims 1 to 12, wherein the local mobile communication terminal (10) is configured to use a specific radio channel for authentication of the remote mobile communication terminals (20, 30).

14. A method for establishing, by a local mobile communication terminal (10), a direct mode link with a remote mobile communication terminal (20),
said local mobile communication terminal (10) comprising a subscription database (11) configured to store at least one security key (K#20),
each of the security keys forming a shared secret between said local mobile communication terminal (10) and one or more remote mobile communication terminals (20), said remote mobile communication terminal (20) comprising an electronic safe (25) configured to store at least one security key (K#20) and
said communication method comprising at least one iteration of the following steps:
• generation by said subscription database (11) of at least one authentication vector (VA) from the at least one security key,
• emulation of an access interface (Sx) to the subscription database (11) of said local mobile communication terminal (10) by a security management entity emulator (12) comprised in the local mobile communication terminal (10),
• generation of an authentication request by said security management entity emulator from the at least one authentication vector (VA),
said authentication request comprising a signalling part of a protocol compliant with the direct mode link, for authentication of said remote mobile communication terminal (20) on the subscription database (11) of said local mobile communication terminal (10), and
• relay of said authentication request, between the security management entity emulator (12) and the remote mobile communication terminal (20).

15. A mobile communication terminal (10) comprising:
- a subscription database (11) configured to store at least one security key (K#20), each of the security keys forming a shared secret between a local mobile communication terminal (10) and one or more remote mobile communication terminals (20) and to generate at least one authentication vector (VA) from the at least one security key (K#20);
- a security management entity emulator (12), configured to emulate an access interface (Sx) to the subscription database (11) of said local mobile communication terminal (10) and to generate an authentication request from the at least one authentication vector (VA); and,
- a proxy module (13) configured to relay the authentication request, between the security management entity emulator (12) and the remote mobile communication terminal (20), said authentication request comprising a signalling part of a protocol compliant with the direct mode link, for authentication of said remote mobile communication terminal (20) on the subscription database (11) of said local mobile communication terminal (10).
